# EUROPEAN PATENT SPECIFICATION

(11) **EP 3 508 341 B1**
(45) Date of publication and mention of the grant of the patent: **04.05.2022**
(21) Application number: 19397507.5
(22) Date of filing: 25.03.2019
(51) Int. Cl.: B32B 7/12, B32B 21/04, B32B 21/06, B32B 21/08, B32B 21/14, B32B 27/10, B32B 27/32, B32B 27/34, B32B 27/42, B32B 29/00, B32B 3/30, B32B 5/02, B32B 7/03, B32B 21/10, B32B 27/12

(54) **A COATED PLYWOOD PANEL**
BESCHICHTETE SPERRHOLZPLATTE
PANNEAU DE CONTREPLAQUÉ REVÊTU

(43) Date of publication of application: 10.07.2019
(73) Proprietor: UPM Plywood Oy, 15140 Lahti (FI)
(72) Inventor: KOSKI, Anna, 15610 LAHTI (FI); ASIKAINEN, Marjaliisa, 17200 Vääksy (FI); PATOVIRTA, Juha, 15870 Hollola (FI)
(74) Representative: Berggren Oy

(56) References cited:
- EP-A1- 3 392 031
- EP-A2- 0 888 908
- JP-A- 2000 202 810

## Description

### Technical field

The invention relates to coated plywood panels. Such panels may be used e.g. in floorings or for concrete forming. The invention relates to methods for manufacturing coated plywood panels. The invention relates to methods for coating plywood panels.

### Background

Plywood panels are commonly used. Various applications, such as floors of vehicles and molds for concrete forming require that the plywood panel is coated, in particular for improved moisture and/or wear resistance. In such applications, the surface of the plywood should be waterproof, optionally wear resistant, and reliable in use. EP 3 392 031 discloses a coated plywood panel, wherein the coating comprises a protective layer and a waterproofing layer. The protective layer is removable from the waterproofing layer in order to keep a bondable surface clean as long as needed.

Oftentimes, a covering has been provided in the form of a phenolic-resin covering. However, phenolic-resin is reasonable brittle, and thus not very wear resistant. Therefore, in particular in floorings, the coating should be somehow reinforced. Moreover, if used in concrete forming, some of the concrete oftentimes remains (i.e. sticks) on the phenolic-resin. Therefore, in particular in concrete forming, some other covering material might be needed. Plastic polymer layers could be used as part of the covering of the coated panel, but oftentimes they do not bond with the wooden material sufficiently well. Several resins are known to bond well with wood, but because of their aqueous composition, they generally do not bond well with plastic polymers. Moreover, resins, in general, need heat and pressure for hardening. Not all polymers can tolerate such an environment.

### Summary

A coated plywood panel suitable for the purpose is disclosed. The coated plywood panel comprises a first covering. The first covering comprises a plastic polymer layer that has a reasonably high melting point and a reasonably high water absorption. Moreover, the plastic polymer layer has been bonded to a wooden layer of the plywood using resin. The relatively high melting temperature of the plastic polymer layer ensures that the plastic polymer layer can withstand the hardening of the resin. Moreover, the relatively high water absorption seems to have the effect that the resin bonds well with the plastic polymer, even if the resin is aqueous and/or some water is produced during hardening. Still further, the resin bonds well to the wooden surface of plywood. The coated panel according to the invention is disclosed in more specific terms in claim 1. The method according to the invention is disclosed in more specific terms in claim 8.

### Brief description of the drawings

- Fig. 1a: shows in a principal view a coated plywood panel,
- Fig. 1b: shows in a side view a coated plywood panel,
- Fig. 1c: shows in a side view an uncoated plywood panel,
- Figs. 2a to 2e: show in side views coated plywood panel,
- Figs. 3a to 3d: show in side views manufacturing of coated plywood panel,
- Fig. 4a: shows in a side view grain orientations within a plywood panel,
- Figs. 4b to 4d: show in principal views grain orientations within a plywood panel,
- Fig. 5a: shows in a principal view a wear resistance test for a coated plywood panel,
- Fig. 5b: shows in a principal view a roller used in the wear resistance test of Fig. 5a.

### Detailed description

Plywood is one of the most recognized material candidates for structural uses among wood-based panels, because it possesses the advantages of dimensional stability, excellent strength to weight ratio, and high chemical and impact resistance. Therefore, it has traditionally been widely used in light frame construction and regarded as a trusted building product. In general, the wood species, density, grain orientation, veneer quality, number of veneers, adhesive (including bonding resin and its amount), and the way the adhesive has been applied influence the overall properties of plywood. Various applications, such as floors of vehicles and molds for concrete forming require that the plywood panel is coated, in particular for improved moisture and wear resistance. In such applications, the surface of the plywood should be waterproof, preferably wear resistant, and reliable in use.

It has been found that these properties can be improved by applying a suitable covering 300 to a plywood panel 101, thereby forming a coated plywood panel 100. Moreover, a plastic polymer material of the covering 300 is selected so as to tolerate the manufacturing process and bond well to a resin. The resin bonds the plastic polymer material to the plywood panel 101.

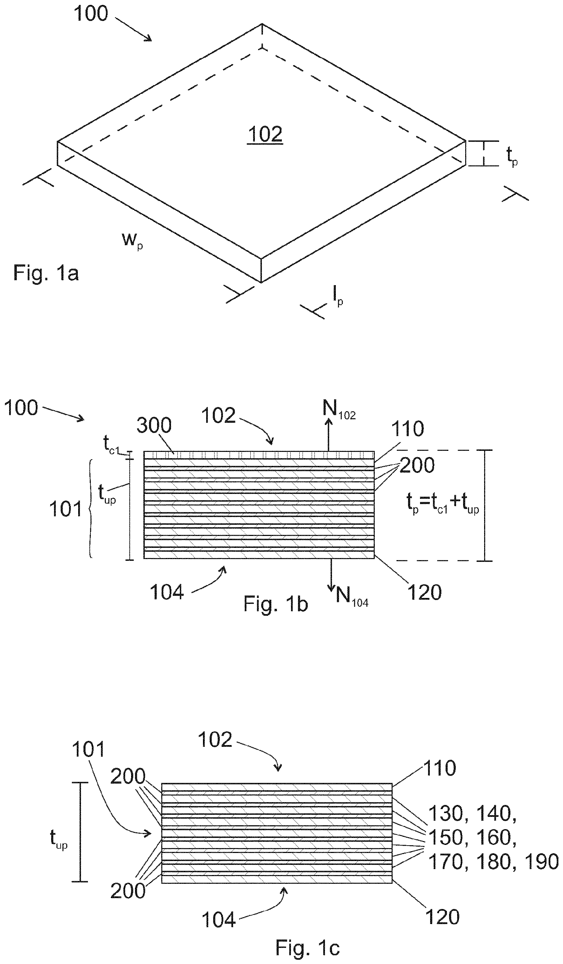

Fig. 1a shows, in a principal view, a coated plywood panel 100. The coated plywood panel 100 has a first surface 102. A surface normal N₁₀₂ of the first surface 102 is unidirectional with a thickness tₚ of the panel 100. The coated plywood panel 100 has a length Iₚ, a width Wₚ, and a thickness tₚ. The thickness tₚ is less than the smaller of the length Iₚ and the width wₚ. Typically, the length Iₚ is at least 1 metre, and the width wₚ is at least 1 metre. In use, the panel 100 may be cut to a desired dimension. The thickness tₚ is typically less than 100 mm.

Fig. 1b shows, in a side view, a coated plywood panel 100. The coated plywood panel 100 comprises a first veneer layer 110, a second veneer layer 120, and a third veneer layer 130. The coated plywood panel 100 may be manufactured by coating an uncoated plywood panel 101 with a first covering 300. In this way, the uncoated plywood panel 101 forms a plywood part of the coated plywood panel 100. Other manufacturing possibilities are discussed below.

As for the names of these veneer layers, the third veneer layer 130 is arranged in between the first veneer layer 110 and the second veneer layer 120 in the direction of the thickness tₚ of the plywood panel 100. Correspondingly, the first veneer layer 110 is an outermost veneer layer. Therefore, all the veneer layers of the panel 101 that comprise wood, except the first veneer layer 110 itself, are arranged on a same side of the first veneer layer 110. In addition, also the second veneer layer 120 is an outermost veneer layer. Therefore, all the veneer layers of the panel 100 that comprise wood, except the second veneer layer 120 itself, are arranged on a same side of the second veneer layer 120. The first and second veneer layers 110, 120 together with all the layers in between these layers constitute a plywood panel 101 or a plywood part. Such a plywood panel 101, i.e. uncoated plywood panel 101, is depicted in Fig. 1c; and in Fig. 1b, the plywood panel 101 forms a part of the coated panel 100.

The veneer layers 110, 120, 130 have been attached to each other with adhesive 200. Preferably, before hardening, the adhesive 200 comprises polymerizable resin. Thus, after hardening the adhesive 200 may comprise hardened resin. However, other types of adhesives 200 are also possible. Most typically, an adhesive 200 used for manufacturing plywood comprises water, resin, and hardener. The hardener may comprise clay, kaolin, starch, microcrystalline cellulose, wood flour, and/or wheat flour. As for the resin, in general the resin comprises polymerizable substance and crosslinking agent. An example of a resin is phenol-formaldehyde resin, wherein phenol forms the polymerizable substance and formaldehyde is used as the crosslinking agent. Another example of a resin is one, in which at least 20 weight-% or at least 50 weight-% of the polymerizable substance originates from lignin. Moreover, both these resins may be used in the adhesive. Such an adhesive is typically heat activated. Thus, by applying heat, at least some of the adhesive 200 hardens. Typically heat and pressure are applied to bond veneer layers of plywood to each other. In a typical manufacturing process, all the resin of the adhesive 200 is not always hardened. Thus, a layer of adhesive 200 of the coated panel 100 or the panel 101 may comprise resin that is still polymerizable.

The coated plywood panel 100 further comprises a first covering 300, as indicated in Fig. 1b. The first covering 300 forms a first surface 102 of the coated plywood panel 100. Naturally, the first veneer layer 110 is not a covering; nor does it form a part of a covering. Thus, in an embodiment, the first covering 300 is free from wood.

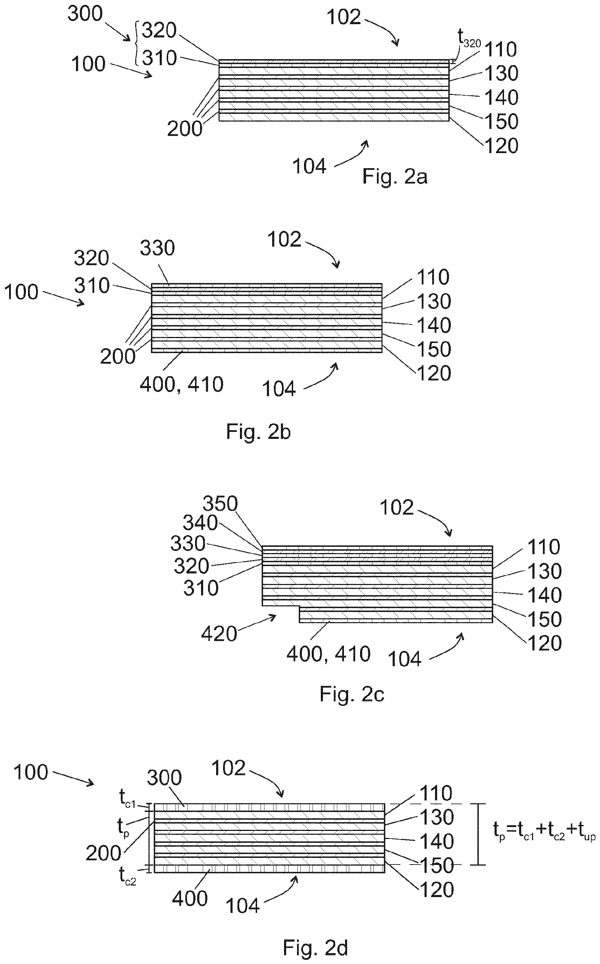

Referring to Figs. 2a to 2b, the first covering 300 comprises a plastic polymer layer 320. A purpose of the plastic layer 320 is to make the first covering 300 reasonably ductile e.g. as compared to a phenolic coating. As indicated in the background, the plastic polymer layer 320 should be bonded reasonably tightly to the first veneer layer 110. The plastic polymer layer is hereinafter referred to as a second layer 320; and it comprises (or is made from) plastic polymer material as detailed below.

In order to form a strong bond with the first veneer layer 110, the first covering 300 comprises also a first layer 310. The first layer 310 comprises hardened resin 310 and bonds the plastic polymer layer 320 (i.e. the second layer 320) to the first veneer layer 110. What has been said about the resin of the adhesive 200 applies to the resin of the first layer 310. This applies, even if in between the veneer layers some other type of adhesive is used. In a particularly preferable embodiment, the first layer 310 comprises polymerized phenol-formaldehyde resin. The first layer 310 may comprise the hardened resin as part of hardened adhesive, e.g. the adhesive 200. Since the first layer 310 bonds the second layer 320 to the first veneer layer 110, the first layer 310 forms a first interface with the first veneer layer, and the first layer 310 forms a second interface with the second layer 320. The term interface herein refers to a boundary between two material layers. An interface may be made e.g. by bonding two surfaces to each other or by applying material onto a surface of another material. Phenol-formaldehyde resin has been found to function particularly well in the first layer 310. Thus, in an embodiment, the first layer 310 comprises hardened phenol-formaldehyde resin. It is also noted that in a typical manufacturing or coating process, all the resin of the first layer 310 is not always hardened. Thus, the first layer 310 may comprise unhardened (i.e. polymerizable) resin. Moreover, as detailed below, the first layer 310 may comprise support material for the resin (hardened and optionally still polymerizable), such as paper or cardboard.

The first layer 310 may be formed while bonding the other layers of the first covering 300 to the first veneer layer 110 by the resin of the first layer 310. Possibilities include:
- impregnating the first veneer layer 110 with resin of low molecular weight and/or
- applying a fibrous material, e.g. paper, impregnated with resin in between the first veneer layer 110 and the rest of the first covering 300 and/or
- providing adhesive comprising resin to bond the first veneer layer 110 to the second layer 320 of the first covering 300 and/or
- applying some resin in between the first veneer layer 110 and the second layer 320 of the first covering 300.

Hereinabove, the "resin of low molecular weight", which is mentioned for the first option only, refers to a resin that comprises molecules having a molecular mass of less than 1000 Da, preferably less than 500 Da, and more preferably less than 300 Da. However, the molecules of the resin may have a mass distribution. Therefore, the "resin of low molecular weight" may refer to a resin that comprises at least 20 % (by number) such molecules that have a molecular mass of less than 1000 Da, preferably less than 500 Da, and more preferably less than 300 Da. This has the effect that at least some of the resin of low molecular weight will penetrate into the first veneer layer 110.

A resin typically comprises some water. Moreover, when hardened, some water forms in the hardening process. Therefore, the second layer 320 should be selected so that it bonds well also to resin. It has been found (see e.g. Table 2) that some polymer materials do not bond well with resins. For these reasons, the second layer 320 comprises such plastic material that has a water absorption of at least 5 wt% (23 °C, Eq.) and a melting point of at least 200 °C. The expression "23 °C, Eq." refers to a test temperature and that the absorption test is continued until equilibrium (see below). More preferably, the second layer 320 consists of such plastic material that has a water absorption of at least 5 wt% (23 °C, Eq.) and a melting point of at least 200 °C.

The term water absorption here refers to water absorption of the material *per se.* It seems, that such a plastic polymer material absorbs some water from the resin of the layer 310 during bonding, and that this absorption improves the bonding between the layers 310 and 320. Herein the absorption value, wherein the test is continued until equilibrium, is indicated, since the equilibrium value is independent of film thickness or other shape of the material. The standard ASTM D570 (reapproved 2018) indicates how equilibrium is determined and gives one example, how long it takes to reach the equilibrium. As for the melting point, the resin of the layer 310 is typically hardened at a temperature of around from 110 °C to 190 °C, to which temperature the resin is heated in the manufacturing process. Thus, the aforementioned melting point ensures that the second layer 320 does not melt in the manufacturing process. Using high temperatures speeds up the coating process, but may pose problems with material degradation. Thus, preferably, a manufacturing method comprises hardening the resin of the layer 310 at a temperature of from 120 °C to 150 °C, and more preferably at a temperature of from 130 °C to 145 °C.

In general, water absorption (or moisture absorption) is the ability of a material to absorb water (or moisture) from its environment, such as water (or air). The degree of water/moisture absorption depends on the type of plastic and the ambient conditions such as temperature, humidity, and contact time. Water/moisture absorption is expressed as increase in weight percent or % weight gain of a plastic specimen.

Water absorption of a material is determinable by a test method. In this description, the water absorption refers to water absorption as tested or testable according to the standard ASTM D570. In a test according to the standard ASTM D570 test specimens of the material are used. The test specimen may be a disc, sheet, rod, or a tube. Throughout the whole specification, a test specimen is a film having a size of 60 mm times 60 mm and a thickness of 1 mm (see the standard ASTM D570, version reapproved 2018, section 5.2). However, since equilibrium values are used, the thickness is not relevant.

Conditioning of the samples are disclosed in the standard. The specimens are first dried in an oven (50 °C) for 24 hours and then placed in a desiccator to cool. Immediately upon cooling the specimens are weighed. The material is then emerged in water at 23 °C until equilibrium (section 7.4 of the standard). Specimens are removed, patted dry with a lint free cloth, and weighed to accuracy of 0.001 g.

The result, water absorption, is expressed as increase in weight percent. The water absorption is calculated as [(Wet_weight - Dry_weight)/ Dry_weight]x100%.

As for the coated plywood panel, by chemically and/or physically analysing the material of the second layer 320, the material from which it is made of can be determined. Moreover, by applying the water absorption test for that material, i.e. a test specimen made from that material, one may determine, whether or not the layer 320 has been made from such material that has the aforementioned properties regarding water absorption and melting point. In particular, the water absorption of the test specimen can be tested. This applies even if the layer 320 cannot be disintegrated as a film that would be suitable for measurements according to ASTM D570. This applies to the method, too, even if the thickness of the material layer 320 does not correspond to those of ASTM D570.

As an example, the melting point of the material of the second layer 320 can be determined by differential scanning calorimetry (DSC). Samples of the layer can be obtained directly from the coated plywood panel 100 or the coating material before manufacturing the panel. Moreover, the composition of plastic materials can be determined e.g. by Fourier-transform infrared spectroscopy (FTIR spectroscopy). The IR-spectrum a sample reflects its molecular composition, thereby providing a chemical fingerprint thereof. Thus, FTIR spectroscopy (and other methods based on IR spectroscopy) is suitable for identifying as well pure compounds as complex materials. Furthermore, the quantification of individual components inside the analysed material is feasible. In particular, different types of polyamides are identifiable from their FTIR spectrum. Differences show e.g. in spectral peak heights in the region between 1800 cm⁻¹ to 400 cm⁻¹. These differences are sufficient to discern the single polymers from each other.

The inventors have found that in particular, an amide group (-CO-NH-) of a polymer is capably of bonding with water, most likely because the amide group is highly polar in particular because of the nitrogen atom. Thereby a polymer comprising amide groups have a large water absorption (large herein in the meaning of as compared to some other polymers, e.g. PE and/or PP). It seems that in particular the amide groups are capable of forming hydrogen bonds with water and in this way, one hand to absorb water, and on the other hand to form strong bonds with aqueous materials. Therefore, suitable materials can be selected e.g. from the group of polyamides (PA).

Properties of polyamides are affected, in addition to the presence of the highly polar amide groups, also by the length of the hydrocarbon backbone. Therefore, not all polyamides have these properties. In particular, a water absorption of polyamide 11 (PA11) and PA 12 seems to be so low that it does not bond well with a resin. It has been found that at least the polyamides PA 6, PA 66 and PA 69 function well for this purpose. Without being bound to a theory, it seems that the relatively short monomers that form PA 6, PA 66 and PA 69 imply a reasonably large portion of amide groups as compared to other carbon atoms, which improves the water absorption. In contrast, the relatively long monomers that form PA 11 and PA 12 imply a lesser portion of amide groups as compared to other carbon atoms, which decreases water absorption.

Therefore, in a preferable embodiment, the plastic polymer layer 320 comprises such polyamide (PA) that has been manufactured from monomers, wherein some of the monomers contain six carbon atoms (e.g. caprolactam). Naturally, after polymerization, the monomers no longer exist. The polyamide (polymer) having been made from monomers with at least six carbon atoms comprises parts having the chemical formula C₆H₁₁NO. Moreover, when the polyamide (polymer) has been made using at least monomers with six carbon atoms, the polymer comprises parts having the chemical formula -CONH-C₅H₁₀-CONH-.

Thus, in other words, in a preferable embodiment, the plastic polymer layer 320 comprises such polyamide (PA) that comprises parts having the chemical formula NOC₇H₁₂NO. I.e. a part of the polymer has this formula, even if the polymer extends further at least from one end. In particular, in a preferable embodiment, the plastic polymer layer 320 comprises at least one of PA 6, PA 66 and PA 69. In particular, it seems that polyamides made from short (six carbon atoms) monomers and long monomers (at least 11 carbon atoms), do not function as well as polyamides made from short (six carbon atoms, resembled by C₆H₁₁NO) monomers and reasonably short monomers (at most 9 carbon atoms, resembled by C_{M}H_{2M}-₁NO, wherein M is from six to nine). The former has six carbon atoms for each nitrogen atom, i.e. a carbon to nitrogen number ratio of 6. The latter has M carbon atoms for each nitrogen atom, i.e. a carbon to nitrogen number ratio of M, wherein M is from six to nine. In an embodiment, the plastic polymer layer 320 comprises such polyamide that has a carbon to nitrogen (C/N) number ratio of at most 8, e.g. from 6 to 8. This corresponds e.g. to a polyamide obtainable from first monomers having 6 carbon atoms and second monomers having 9 carbon atoms.
Table 1 shows water absorption of selected polymer materials as measured according to the standard ASTM D570. Values are given as an equilibrium value (Eq.). A temperature of 23 °C is used in the test.

**Table 1: water absorption of selected polymers.**

| | **Melting** | **Vater absorption** |
|---|---|---|
| **Material** | **point (°C)** | **(%), Eq.** |
| PA6 | 215 - 220 | 9-10 |
| PA12 | 172 - 180 | 1.5 |
| PE | 110-135 | 0.01- 1.5 |
| PP | 130-158 | 0.01 - 0.1 |

As indicated in Table 1, PA6 has significantly higher water absorption than some other polymers. In addition, Table 1 indicates that not all polyamides have a water absorption of at least 5 wt% (23 °C, Eq.)

Moreover, preferably, the plastic polymer layer 320 comprises or consists of thermoplastic material. Many thermoset polymers are more brittle than thermoplastic polymers. Therefore, by using such a second layer 320 that comprises thermoplastic polymer, or preferably consists of thermoplastic polymer, improves the wear resistance, because the ductility of the second layer 320 decreases formation of microcracks within the first covering 300. In general polyamides are thermoplastic materials.

As indicated above, the resin of the first layer 310 bonds well with both the first veneer layer 110 and the second layer 320. Moreover, in general there is no need for other layers than the first layer 310 in between the second layer 320 and the first veneer layer 110. Therefore, in an embodiment, the coated plywood panel 100 only comprises the first layer 310 in between the second layer 320 and the first veneer layer 110. As in indicated above, the first layer 310 comprises hardened resin and may further comprise polymerizable resin. The resin may form part of an adhesive, which constitutes the first layer 310. The first layer 310 may comprise a support for the resin. Typically, if the resin forms a part of an adhesive, a support is not needed. Thus, in an embodiment, the first layer 310 comprises at least 50 wt% resin. As indicated above, not all the resin needs to be hardened.

The resin may have been impregnated into paper (or cardboard), which is an example of wood-based fibrous material. In an embodiment, the first layer 310 is free from such fibrous material that does not originate from wood. This has the effect that the mass of the coated plywood panel can be kept at a low level. This is also beneficial from the point of view of recycling materials. For example, the paper/cardboard may be made from recycled paper. In addition, the paper/cardboard support is easily disposed by burning. Moreover, while resin bonds well with materials originating from wood, because of presence of hydroxyl groups, the resin does not necessarily bond as well to other materials. This may have a detrimental effect on the properties of the first covering 300. Examples of fibrous material that do not originate from wood include glass fibres, carbon fibres, aramid fibres, and fibres of plastic polymer (e.g. PP, PE). Examples of fibrous material that do originate from wood include paper and cardboard.

It has been found that such a second layer 320 bonds well with the resin of the layer 310 at least when a thickness t₃₂₀ of the second layer 320 is at least 20 µm. The thickness t₃₂₀ of the second layer 320 may be from 20 µm to 500 µm, such as from 25 µm to 200 µm, such as from 30 µm to 150 µm. It has been found that this thickness makes the first covering 300 more ductile than without the layer 320 (whereby e.g. the layer 310 could form a surface of the panel), at least when the second layer 320 comprises thermoplastic material. Moreover, it seems that the water, which the second layer 320 absorbs from the resin of the first layer 310, further makes the materials more ductile. In other words, it seems that the absorbed water (or moisture) acts as a plasticizer in the layer 320, thereby e.g. increasing elongation at break. This seems to apply at least when the thickness of the second layer 320 is within the aforementioned range. Moreover, from economical point of view it is beneficial not to use a too thick second layer 320. It is noted that, as an example, Nylon owes part of its toughness to the plasticizing effect of moisture.

The first covering 300 is adhered to the first veneer layer 110 sufficiently strongly, because of the resin-based first layer 310. In general, resin adheres well to wood, i.e. the first veneer layer 110. The strength of this bonding is the result of the first layer 310 bonding well to both the first veneer layer 110 and the second layer 320 of the first covering 300. The strength of this bonding can be described e.g. by an adhesion strength. An adhesion strength herein is defined to mean the release force of the first covering 300 from the first veneer layer 110. The release force and its measurement is described in the standard ISO 4578. In a release force measurement, the first covering 300 is detached from the first veneer layer 110 at an angle 90 degrees. The release force measurements are performed at room temperature (e.g. 25 degrees C). The force needed to peel the first covering 300 depends on the width of the opening. The release force is therefore given in proportion to the width of the opening. In the measurement, a sample having the width 25 mm is used. In an embodiment, an adhesion strength between the first covering 300 and the first veneer layer 110 is greater than 10 N/mm. The bonding may be so strong that a precise value thereof cannot be measured. However, whether the adhesion strength is greater than 10 N/mm or not is also in such case measurable.

In an embodiment, the first veneer layer 110 comprises hardwood. The term hardwood refers wood from a deciduous tree. In particular, in an embodiment, the veneer layers (of the plywood panel 100) that comprise hardwood, comprise one of ash, aspen, basswood, beech, birch, cherry, hickory, mahogany, maple, oak, poplar, lauan, teak, rosewood, okumé, and meranti; preferably birch or beech, most preferably birch. When the first veneer layer 110 comprises hardwood, the topmost veneer layer 110 of the coated plywood panel 100 is hard. Therefore, the panel 100 is resistant to impacts and shocks from this side. This also improves the strength and wear resistance of the coated plywood panel 100. In addition, the resin of the first layer 310 may bond more strongly to hardwood than to softwood, which further improves the strength and wear resistance of the coated plywood panel 100. In a preferable embodiment, each veneer layer (110, 120, 130, 140, 150) that comprises wood, comprises hardwood. As indicated above and below, the hardness of the topmost first veneer layer 110 can be increased by impregnating the first veneer layer 110 with resin of low molecular weight.

As for the various hardwoods, birch is preferable. Birch has been found to have a particularly beneficial strength compared to its density. For example, birch has a bending strength twice that of spruce (which, however, is softwood). Moreover, when used as the first veneer layer 110, birch as a suitable hardness.

In an embodiment, a thickness of the third veneer layer 130 is from 1 mm to 3 mm, preferably from 1 mm to 2 mm. In an embodiment, a thickness of each one of the intermediate veneer layers 130, 140, 150, ... is from 1 mm to 3 mm, preferably from 1 mm to 2 mm. The term intermediate veneer layer refers to a veneer layer, which is wooden, and which is not an outermost (wooden) veneer layer 110, 120. I.e. all veneer layers except the first 110 and the second 120 veneer layers are intermediate veneer layers. In the manufacturing process, at least one of the first and second veneer layers 110, 120 may be sanded, whereby a thickness thereof may be somewhat less that that described for the intermediate veneer layers 130, 140, .... In an embodiment, a thickness of the first 110 and/or the second 120 veneer layer is from 0.5 mm to 3 mm, such as from 0.5 mm to 2 mm. These values apply in particular, when the coated plywood panel comprises a veneer or veneers comprising hardwood.

In an embodiment, a thickness tᵤₚ of the uncoated part 101 of the coated plywood panel 100 (see Figs. 1b, 1c, 2d) is from 5 mm to 75 mm; preferably from 12 mm to 50 mm, and more preferably from 21 mm to 30 mm. These values apply in particular, when the coated plywood panel comprises a veneer or veneers comprising hardwood. These values apply in particular, when the coated plywood panel comprises a veneer or veneers comprising hardwood and the thicknesses of the veneer layers are within the aforementioned range. In such a case, the thickness provides for sufficient strength for use as a flooring of a vehicle. More precisely, a frame for flooring defines a span, and a the flooring should have sufficient wheel loading capacity for the intended use for the applicable span. It has been found that the e.g. a thickness of 21 mm provides for wheel loading capacity of at least 1000 kg for typical spans, which is sufficient for many flooring applications. The wheel loading capacity can be improved by proving a structure that is not cross laminated throughout The loading capacity can measured according to standard ISO 1496-1. In order to have such a thickness and to have a reasonably isotropic panel, the coated plywood panel 100 comprises at least three veneer layers. Preferably, the coated plywood panel 100 comprises from 5 to 30 veneer layers, such as from 9 to 25 veneer layers.

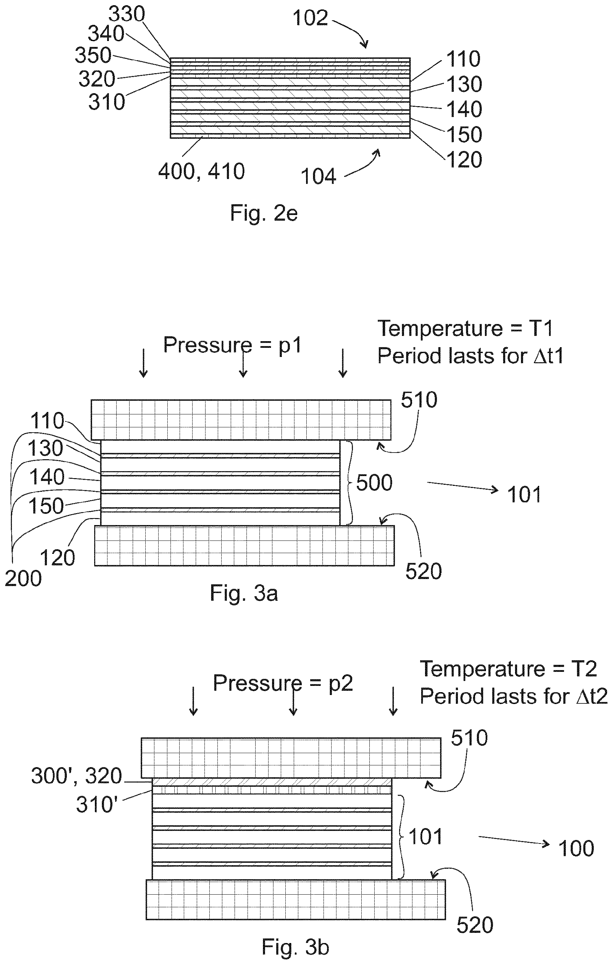

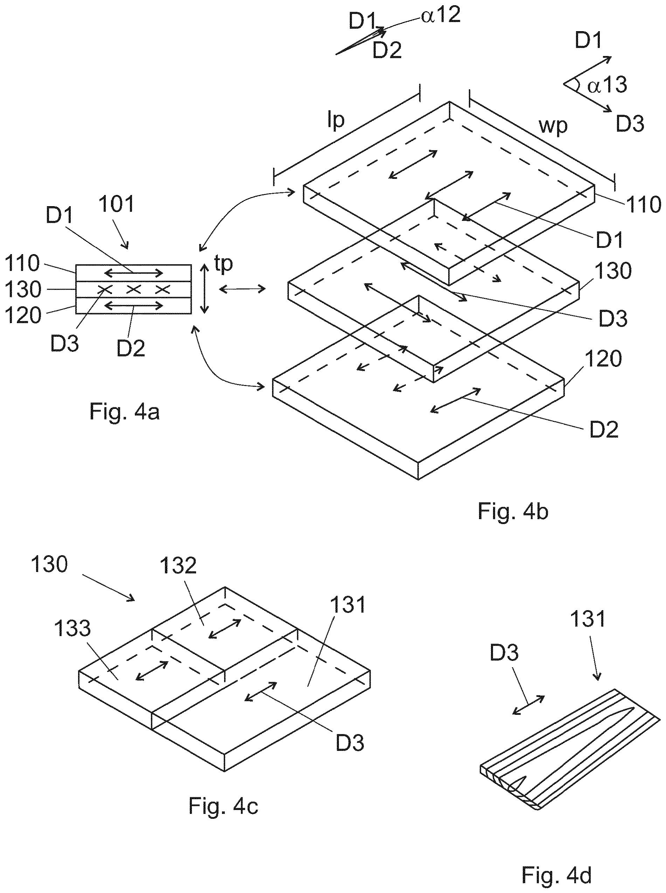

Referring to Figs. 4a to 4d, in an embodiment, the first veneer layer 110 comprises wood having a first grain orientation D1, the second veneer layer 120 comprises wood having a second grain orientation D2, and the third veneer layer 130 comprises wood having a third grain orientation D3. Referring to Figs. 4a and 4b, in order for the plywood panel 100 to have somewhat isotropic properties, the first grain orientation D1 forms an angle α13 with the third grain orientation D3, wherein the angle α13 is from 60 to 120 degrees. Typically, the angle α13 is 90 degrees, or at least substantially 90 degrees (e.g. from 85 to 95 degrees). The angle α13 is shown in Fig. 4b. In a preferable embodiment, the first grain orientation D1 is unidirectional with the second grain orientation D2 or the first grain orientation D1 forms an angle α12 of at most 30 degrees with the second grain orientation D2. As observable from Fig. 3b, therein the angle α12 is small, i.e. the first grain orientation D1 is substantially unidirectional with the second grain orientation D2. Evidently, the first grain orientation D1 may be unidirectional with the second grain orientation D2. Having the first veneer layer 110 and the second veneer layer 120 oriented so that their grain orientations D1 and D2 are at least substantially unidirectional (in the meaning disclosed above) has a beneficial effect for the isotropy.

Figures 4a to 4d show the structure of the plywood panel 101 in more detail. The figures 4a to 4d show the plywood panel without the covering 300, whereby the reference numeral 101 is used. Fig. 4a shows, in a side view, a panel 101 with three veneer layers 110, 120, 130. These veneer layers comprise wood, preferably hardwood, with grain orientations D1, D2, and D3, respectively. The arrows shown in the layers 110 and 120 indicate a grain direction D1, D2 from left to right or from right to left in Fig. 4a. The cross mark shown in the layer 130 in Fig. 4a indicates a grain direction D3 that is perpendicular to the plane of the paper showing the cross mark. Using a convention discussed in detail below, the grain orientations of Fig. 4a can be indicated as |-| or -|-. Such a structure is cross laminated throughout.

Fig. 4b shows an exploded view of panel of Fig. 4a. Fig 4c shows in principle, how a veneer layer 130 may be constituted from more than one veneers 131, 132, 133. However, for illustrative purposes, the grain direction D3 of Fig. 4c is different from that of Fig. 4b. Finally, Fig. 4d shows a veneer 131, annual rings observable from the veneer, and a grain orientation D3 of the veneer 131 of Fig. 4c. As shown in Fig. 4d, in wood, the annual rings extend, in a ring form, in the grain orientation.

The uncoated plywood panel 101, i.e. the plywood part of the coated plywood panel 100, may be cross laminated throughout. The term cross laminated refers to plywood, in which the grain direction of each one of the veneer layers (110, 120, 130) is perpendicular the grain direction of the adjacent veneer layer (on top) or layers (in the middle). Commonly, a lengthwise grain orientation is indicated by "|" and a crosswise, perpendicular, grain orientation is indicated by "-". Thus, in case the plywood panel 101 of Fig. 1c was cross laminated throughout, the grain orientations of the veneers layers 110, 120, ..., 190 of Fig. 1c would be indicated by |-|-|-|-| or -|-|-|-|- More typically, the direction of topmost layer is indicated by "|" irrespective of the direction of length relative to the grain orientation of the topmost layer. Particularly in flooring applications, it may be beneficial to reinforce the plywood panel by arranging the layers differently. Thus, the internal structure of a nine veneer panel of Fig. 1c could be e.g. |--|-|--| or ||-|-|-|| or |---|---| or |||-|-|||. In case the panel comprises an even number of veneer layer, two intermediate layers are often oriented in the same grain direction, more typically such intermediate layers that are close to the centre of the panel are oriented in parallel. For example, a non-oriented structure with twenty-two veneer layers could be |-|-|-|-|--|-|-|-|-|-| or |-|-|-|-|-||-|-|-|-|-|. Oriented structures with twenty-two veneer layers include |---|-|-|-|-|-|-|---| and ||-|||-|-||-|-|-|||-||- In particular the second and the third veneer layers, as counted from the first 110 and/or second 120 veneer layer, may be oriented unidirectionally. Optionally also a fourth veneer layer, as counted from the first 110 and/or the second 120 layer, may be oriented unidirectionally relative to the third layer (third, as counted from the first 110 or second 120 veneer layer). This has the effect that the bending strength and bending modulus of the plywood panel 101 is improved in a predefined direction. This applies also, if the panel 101 or coated panel 100 comprises more than nine veneer layers. This may apply also, if the panel 101 or coated panel 100 comprises less than nine veneer layers.

Moreover, in addition to having a structure that is not cross laminated throughout, or as an alternative to it, the coated plywood panel 100 may be provided with reinforcing layers, such as a layer comprising glass fibres, carbon fibres or aramid fibres. In particular, the uncoated plywood panel 101 may be provided with reinforcing layers, such as a layer comprising glass fibres, carbon fibres or aramid fibres.

While the second layer 320 makes the first covering more ductile, it can also be used for a base for joining further layer(s) onto the first coating 300. Further layers may be important, when the properties of the coating are not otherwise sufficient. Such properties include wear resistance (i.e. abrasion resistance) and water repellence. For these reasons, and with reference to Fig. 2b, in the invention, the first covering 300 comprises a third layer 330, wherein the second layer 320 is arranged in between the third layer 330 and the first layer 310. The third layer comprises polymer material.

In an embodiment related to, in particular, use for concrete forming, the third layer 330 comprises at least one of polyethylene (PE) and polypropylene (PP). These materials are water repellent and therefore wet concrete does not stick on such a surface. Moreover, even if PP or PE does not adhere well with resin e.g. of the layer 310, it has been found that PE and PP adhere well to the second layer 320, e.g. to polyamide. The layers 320 and 330 may be provided as a integral double-layer sheet comprising a layer 320 comprising polyamide and the third layer 330. Preferably, in this embodiment, the third layer 330 forms the first surface 102 of the coated plywood panel 100, so that the water repellence of third layer 330 can be properly utilized. As indicated above, the first surface 102 has a normal N₁₀₂ that is unidirectional with the thickness tₚ of the coated panel 100. Moreover, to help the removal of concrete from the surface, preferably, the first surface 102 of the coated plywood panel 100 is, in this embodiment, even, i.e. smooth. Herein the even surface refers e.g. to a surface that is free from
- protrusions having a height of at least 0.5 mm and a cross-sectional area from 0.01 (mm)² to 100 (cm)² and from
- indentations having a depth of at least 0.5 mm and a cross-sectional area from 0.01 (mm)² to 100 (cm)².

According to the invention, in particular, related to the use for as a flooring for a vehicle, the third layer 330 comprises hardened phenol formaldehyde resin. What has been said about resins above, applies. During manufacturing, the second layer 320 takes in water from the third layer 330, whereby also the third layer 330 forms a strong bond with the second layer 320. In an embodiment, a surface specific mass of the third layer 330 is from 60 g/m² to 400 g/m². Such a third layer may be provided in a form of a fibrous carrier (e.g. paper) impregnated with the resin. Such a third layer 330 provides for increased wear resistance for the first covering 300. Such a third layer 330 provides for increased wear resistance for the first covering 300 in particular, when the third layer 330 forms the first surface 102 of the coated plywood panel 100, as in Fig. 2b. Moreover, in case the coated plywood panel 100 comprises even further layers, in the embodiment, the layers may be ordered in such a way that the third layer 330 forms the first surface 102 (see e.g. Fig. 2e). A friction of a surface of a floorings of a vehicle is preferably high. This has many beneficial effects including safety during loading and keeping cargo in place during transport. The friction can be improved by patterning the first surface 102 of the coated plywood panel 100. Thus, preferably furthermore the first surface 102 of the coated plywood panel 100 comprises protrusions and/or indentations to increase friction. In particular, the first surface 102 may comprise at least one of
- protrusions having a height of at least 0.5 mm and a cross-sectional area from 0.01 (mm)² to 100 (cm)² and
- indentations having a depth of at least 0.5 mm and a cross-sectional area from 0.01 (mm)² to 100 (cm)².

In order to further improve the wear resistance and/or the strength of the first covering 300, also the first layer 310 may be reasonably thick. In an embodiment, a surface specific mass of the first layer 310 is from 60 g/m² to 400 g/m².

Preferably, at least when the coated panel 100 is suitable for use as a flooring for a vehicle, the first covering 300 thereof comprises
- the first layer 310 comprising hardened resin (preferably hardened phenol formaldehyde resin), wherein a surface specific mass of the first layer 310 is from 60 g/m² to 400 g/m²; preferably from 100 g/m² to 300 g/m²; optionally added by a mass of a primary first layer 310'a, as indicated below,
- the second layer 320 as discussed above, comprising polyamide with a high water absorption and melting point and having a thickness of from 20 µm to 500 µm, preferably from 40 µm to 200 µm; and
- the third layer 330 comprising hardened phenol formaldehyde resin, wherein a surface specific mass of the third layer 330 is from 60 g/m² to 400 g/m²; preferably from 100 g/m² to 300 g/m²

Moreover, the first 310 and third 330 may comprise paper such that the resin (hardened and optionally also polymerizable) constitutes at least 50 wt% of the first 310 or third 330 layer, respectively.

In floorings there are two particularly feasible options. First, that the third layer 330 forms the first surface 102 of the coated plywood panel 100, and the third layer 330 forms an interface with the second layer 320. In other words, the first covering 300 only comprises the layers 310, 320, and 330. This is appealing from economical point of view, since such a first covering function well in many applications. Second, that further layers 340, 350 are provided onto the third layer 330. Such an option may be used if an even better wear resistance is required. In such a case, preferably, the first covering 300 comprises at least a fourth 340 and a fifth 350 layer, as detailed below.

Referring to Fig. 2c, in an embodiment, the first covering comprises the third layer 330 and a fourth layer 340. The fourth layer comprises such plastic material that has a water absorption of at least 5 wt% (23 °C, Eq.) and a melting point of at least 200 °C. More preferably, the fourth layer consists of such plastic material that has a water absorption of at least 5 wt% (23 °C, Eq.) and a melting point of at least 200 °C. The fourth layer may be made of the same material as the second layer 320. What has been said about the material and the thickness of the second layer 320 applies also to the fourth layer 340.

In the embodiment of Fig. 2c, the first covering comprises the third layer 330, the fourth layer 340, and a fifth layer 350. The fifth layer 350 may comprise hardened resin, most preferably hardened phenol formaldehyde resin. The fifth layer 350 may be made of the same material as the third layer 330. What has been said about the material and the thickness of the third layer 330 applies also to the fifth layer 350.

Even if not shown in Fig. 2c, the coated plywood panel 100 may comprise the fourth layer 340 without the fifth layer 350. In such a case a plastic polymer layer, e.g. made of polyamide, would form a surface of the coated plywood panel. Moreover, the coated plywood panel 100 may comprise the fifth layer 350 without the fourth layer. As a result, the topmost layer would be a thick layer comprising hardened adhesive. Even if not shown in Fig. 2c, the coated plywood panel 100 may comprise further layers. For example, the first covering may comprise nine layers (320, 340, and other that are not shown) that comprise or consists of such plastic material that has a water absorption of at least 5 wt% (23 °C, Eq.) and a melting point of at least 200 °C. In between each pair of two neighbouring plastic material layers, layers comprising hardened resin (e.g. 330, 350, and others that are not shown) may be applied.

When the coated plywood panel 100 is used as a part of a flooring of a vehicle, preferably also the other side, in particular the second surface 104 (see Figs. 2b and 2c) of the coated panel 100 is sufficiently water resistant, since roads may be occasionally wet. However, the other side needs not to be wear resistant. For this reason and with reference to Figs. 2b to 2e, an embodiment of the coated plywood panel 100 comprises a second covering 400 directly attached to the second veneer layer 120 of the coated plywood panel 100. The second covering 400, in particular a first layer 410 of the second covering 400 is attached directly, whereby it forms an interface with the second veneer layer 120 to which it is attached. Thus, in an embodiment, no material is left in between the second covering 400 and the second veneer layer 120. As indicated in Figs. 2b to 2e, the second covering 400 forms a second surface 104 of the coated plywood panel 100. The second surface 104 is opposite to the first surface 102. A surface normal N₁₀₄ of the second surface 104 is unidirectional with the thickness tₚ of the panel 100. Clearly, the second veneer layer 120 is not a covering. Thus, in an embodiment, the second covering 400 is free from wood.

A waterproofness of the second covering 400 may be characterized e.g. by an IP level with a code. The IP code in the IP level refers to the Ingress Protection Rating, i.e. International Protection Rating. It is defined in the standard ANSI/IEC 60529-2004 (approved November 3, 2004). Preferably, the second covering 400 is waterproof at least to IP level 2. Thus the second covering 400 may be waterproof against water equivalent to 3 mm rainfall per minute, at least for 10 minutes. In addition, preferably, the second covering 400 comprises or consist of suitable polymer material.

Another possibility to characterize waterproofness is to assume that wetting occurs by Fickian diffusion. For example, the diffusion coefficient of moisture for some polymers that are generally considered water proof are about 3×10-12 m²/s. Preferably, the diffusion coefficient of the second covering 400 is less than 1×10-6 m²/s. More preferably, the diffusion coefficient of the second covering 400 is less than 1×10-9 m²/s. It is noted that the diffusion coefficient is dependent on temperature, and the given limit refers to normal operating temperature of the panel. The normal operating temperature may be e.g. 30 °C. A thickness t_{c2} of the second covering 400 (see Fig. 2d) may be e.g. at least 50 µm; such as from 50 µm to 15 mm; preferably from 100 µm to 5 mm.

Suitable materials for the second covering 400 include polypropylene, polyethylene, maleic anhydride polypropylene, maleic anhydride polyethylene, and resins, such as phenol formaldehyde resin. Preferably, the second covering 400 comprises hardened resin, and more preferably hardened phenol formaldehyde resin.

Referring to Fig. 2c, in an embodiment, that side of the coated plywood panel 100 that comprises the second surface 104 is provided with a groove 420. The groove can be used to attach the coated plywood panel 100 to a supporting structure, such as a frame of a vehicle. Preferable, when that side of the coated plywood panel 100 that comprises the second surface 104 is provided with a groove 420, the second covering 400 forms the second surface 104. In other words, in such a case preferably also the other side (opposite to the first covering) is coated. Even is not shown in the figures, that side of the coated plywood panel 100 that comprises the second surface 104 may be provided with a groove 420, even if the coated plywood panel 100 is free from the second covering 400. A width of the groove 420, the width being measured in the plane of the second surface 104, may be e.g. from 10 mm to 50 mm, preferably from 15 mm to 30 mm. A depth of the groove 420, the depth being measured in the direction of thickness of the coated panel 100, may be e.g. from 1 mm to 15 mm, preferably from 2 mm to 8 mm.

As for preferable measures of the coated plywood panel 100, with reference to 1b and 2d, a thickness t_{c1} of the first covering 300 may be from 50 µm to 5 mm, preferably from 100 µm to 4 mm. A thickness tᵤₚ of the plywood panel 101, i.e. the other parts of the coated plywood panel 100 than the coverings 300, 400, may be from 5 mm to 95 mm, such as from 12 mm to 50 mm, such as from 21 mm to 30 mm. In a flooring application the thickness is typically from 12 mm to 50 mm, such as from 21 mm to 30 mm, while in other applications, such as concrete moulding, the range 5 mm to 21 mm may be sufficient. Even if panels having the thickness from 50 mm to 95 mm could be used for flooring, from economical point of view, this is often not beneficial due to increased manufacturing costs and weight, which implies costs in use as flooring in a vehicle. A thickness t_{c2} of the second covering 400 may be from 50 µm to 5 mm, preferably from 100 µm to 4 mm. A coated panel 100 needs not to comprise the second covering 400. However, in flooring applications, the second covering is beneficial. For these measures, see Figs. 1b, 1c, and 2d.

The coated plywood panel 100 can be manufactured by providing a plywood panel 101, providing a preform 200' for the first covering 300, the preform 300' comprising at least the second layer 320, and attaching the preform 300' to the plywood panel 101 with some resin based material (e.g. adhesive or resin) to form a coated plywood panel 100. The second layer 320 of the preform 300' is attached to the first veneer layer 110 using a resin or an adhesive comprising resin, whereby the resin or the adhesive comprising resin forms the aforementioned first layer 310 of the first covering 300 of the coated plywood panel 100.

Referring to Fig. 3a, the uncoated plywood panel 101 may be made first by hot pressing a stack 500 of veneer layers and adhesive. Referring to Fig. 3b, thereafter, the first covering 300 may be formed onto the plywood panel 101 to form a coated plywood panel. A preform 300' for the first covering 300 may be attached to the plywood panel 101, in particular to the first veneer layer 110 thereof, with resin or adhesive comprising resin 310'. The preform 300' for the first covering 300 may comprise the other layer or layers of the first covering except for the first layer 310. In the alternative, subsequent plastic layers (320, 340) may be attached to the panel 101 using some resin or adhesive comprising resin to form the layers 310, 330 therein between. In addition or alternatively, a topmost layer (330, 350) comprising hardened resin may be applied onto a plastic layer (320, 340).

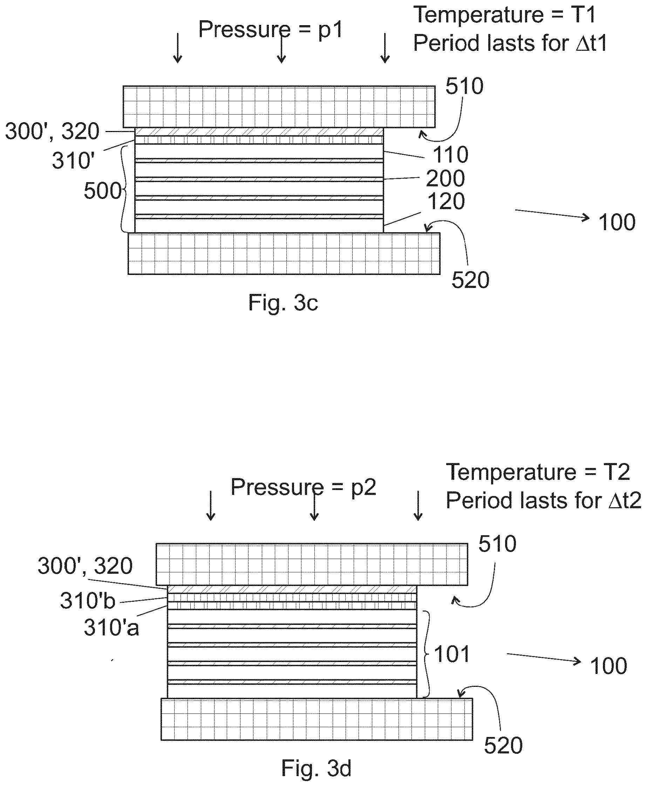

Referring to Fig. 3c, in the alternative, all the layers of the coated plywood panel 100 may be arranged in a stack that is hot-pressed to form a coated plywood panel 100.

More specifically, an embodiment of a method for manufacturing a coated plywood panel 100 comprises
- providing a plywood panel 101 comprising
   - a first veneer layer 110, a second veneer layer 120, and a third veneer layer 130, wherein
   - the third veneer layer 130 is arranged in between the first veneer layer 110 and the second veneer layer 120 in the direction of the thickness tp of the plywood panel 101, and
   - the veneer layers 110, 120, 130 have been attached to each other with adhesive 200.

Referring to Fig. 3a, the panel 101 may be provided by manufacturing the panel 101 before manufacturing the coated plywood panel 100. Thus, a stack 500 may be formed of the veneers 110, 120, 130 and the adhesive 200, and the stack may be hot pressed to form the uncoated plywood panel 101. Referring to Fig. 3c, the panel 101 may be provided, by providing a stack 500 comprising the individual veneer layers 110, 120, 130, and adhesive 200, and pressing the layer of the first covering to the stack at the same time the stack 500 is pressed to form the panel.

The method further comprises providing a preform 300' for a first covering 300. The preform 300' comprises a second layer 320 made of such plastic polymer material that the material has a water absorption of at least 5 wt% (23 °C, Eq.) and a melting point of at least 200 °C.

The method further comprises providing resin 310' in between the uncoated plywood panel 101 and the preform 300' for the first covering 300; and bonding the uncoated plywood panel 101 to the preform 300' of the first covering 300 by hot pressing, thereby hardening the resin 310' and forming a first layer 310 of the first covering 300. The preform 300' may comprise, in addition to the second layer 320, further layers 330, 340, 350. In such a case, the preform 300' of the first covering 300 is attached to the first veneer layer 110 such that the second layer 320 forms an interface with the resin 310'. In other words, the preform 300' of the first covering 300 is attached to the first veneer layer 110 such that the second layer 320 faces the resin 310'. The uncoated plywood panel 101 is bonded to the preform 300' of the first covering 300 by hot pressing such that the temperature of the a second layer 320 does not exceed the melting point of the second layer 320. Preferably, the uncoated plywood panel 101 is bonded to the preform 300' of the first covering 300 by hot pressing at a temperature that does not exceed 200°C. Preferably, the uncoated plywood panel 101 is bonded to the preform 300' of the first covering 300 by hot pressing with such surfaces (510, 520) of which temperature is at most 200°C. Preferable temperature ranges have been indicated above for the coating process.

It has been found that a moisture content of the first veneer layer 110, which may be part of a pre-bonded plywood panel 101, or part of the stack 500, is preferably in the range from 2 wt% to 7 wt%, preferably from 3 wt% to 6wt%. It seems that at such a moisture content, the resin 310' bonds well with the first veneer layer 110.

The resin 310' may be provided with and adhesive comprising the resin 310'. As indicated above, an adhesive may comprise resin 310', hardener, and additional water. The resin 310' as such also comprises some water. The resin 310' or the adhesive comprising the resin 310' may be an aqueous solution that is spread onto the first veneer layer 110, such as on the first surface 102 of the plywood panel 101. The resin 310' may be impregnated into a carrier material, such as a fibrous carrier material, such as paper, whereby the resin 310' may be provided as a film.

In an embodiment, the surface 102 of the first veneer layer 110 is impregnated with low molecular weight phenolic resin before coating to strengthen and harden the first veneer layer 110, which may comprise hardwood such as birch. This is particularly beneficial in applications, where the first layer forms a topmost veneer layer. A hardened top veneer layer 110 takes in mechanical shock and impact better than an unhardened top veneer layer. Also hardwood, particularly birch, takes in mechanical shock and impact better than a softwood. Impregnation of the first veneer layer 110 can be done in a separate process using aqueous solution comprising the resin (e.g. roller application or spraying before applying the preform 300' for the covering 300) or during the coating process (e.g. a phenolic film impregnated with low molecular weight resin). Referring to Fig. 3d, the layer of resin 310' may comprise a primary first layer 310'a of low molecular weight resin, i.e. first resin, and secondary first layer 310'b of higher molecular weight resin, i.e. second resin. The secondary first layer 310'b comprises the second resin having a higher molecular weight than the first resin of the primary first layer 310'a. As indicate above, the primary first layer 310'a of low molecular weight resin may be applied as an aqueous solution or a film. A surface specific weight of the primary first layer 310'a may be e.g. from 20 g/m² to 250 g/m², preferably from 50 g/m² to 150 g/m². Preferably, the secondary first layer 310'b of higher molecular weight resin is applied as a film. As indicated above, a surface specific mass of the secondary first layer 310'b of higher molecular weight resin is preferably from 60 g/m² to 400 g/m²; more preferably from 100 g/m² to 300 g/m². In an embodiment, the second resin impregnated to the carrier material (i.e. that of the secondary first layer 310'b) has a second average molecular weight that is higher than a first average molecular weight of the first resin of the primary first layer 310'a. Having a higher molecular weight has the effect that a substantial part of the second resin does not impregnate into the wood, whereby a sufficiently thick layer 310 of hardened resin is formed. Moreover, a substantial part of the first resin may penetrate the first veneer 110. As readable from above, a surface specific mass of the first layer 310, optionally comprising the primary first layer 310'a and the secondary first layer 310'b, may be from 60 g/m² to 650 g/m², such as from 60 g/m² to 550 g/m².

As for the molecular mass of the first resin of the primary first layer 310'a, what has been said above about the "resin of low molecular weight" applies. As for the molecular mass of the second resin of the secondary first layer 310'b, preferably the second resin comprises molecules having a molecular mass of more than 2000 Da, preferably more than 5000 Da, and more preferably more than 10000 Da. However, the molecules of the resin may have a mass distribution. Therefore, this resin may refer to a resin that comprises at least 20% (by number) such molecules that have a molecular mass of more than 2000 Da, preferably more than 5000 Da, and more preferably more than 10000 Da. It is also noted that these molecular masses refer, in particular, to the polymerizable resin. In the coated plywood panel 100, at least some of the resin is hardened. However, when manufacturing the coated panel 100 or coating an uncoated panel 101, substantially all the resin is polymerizable.

Having the layer of resin 310' that comprises the first resin and the second resin, as detailed above, is particularly beneficial in flooring applications. The use of the primary first layer 310'a has been found to harden to first veneer layer and to improve the bonding in between the first covering 300 and the first veneer layer 110. What has been discussed in detail for a panel particularly suitable for flooring, applies also for the method. In particular, the panel 100 comprises the third layer 330.

Thus, the preform 300' may comprise also the third layer 330 as discussed in the context of the coated plywood panel 100. In the alternative, the third layer 330 may be e.g. hot pressed onto the second layer 320 of a partly coated plywood panel. The third layer 330 may form the first surface 102 and an interface between the second layer 320.

In the alternative, the preform 300' may comprise also the fourth layer 340 as discussed in the context of the coated plywood panel 100. The preform 300' may comprise also the fifth layer 350 as discussed in the context of the coated plywood panel 100. In the alternative, the different layers can be applied subsequently. E.g. the preform 300' may consist of the second layer 320. After a coated panel has thus been made, the third layer 330 may be e.g. hot pressed onto the second layer 320. The layers 330 and 340 may be e.g. hot pressed onto the second layer 320.

The preform 300' for the first covering 300 may be arranged in a suitable manner. In particular, when the preform 300' consists of the second layer 320, the preform 300' may be arranged in the form of a film, or the preform 300' may applied by extrusion. Preferably, the preform 300' is arranged in a form of a film. As indicated above, the preform 300' may be a multilayer film. Preferably, the preform 300' is supplied as a monolayer or multilayer film or laminate. The film or laminate may be reasonably thick. For example, as indicated above, the first covering 300 may comprise e.g. around twenty layers, every second of which are plastic polymer layers (e.g. 320, 340), and the other layers (e.g. 310, 330, 350) are resin-based layers, whereby a thickness of the preform 300' may be within the limits given for the first covering 300 above.

As indicated above, the coated plywood panel 100 is wear resistant, at least from the side of the first covering 300, and provided that the first covering is sufficiently thick. As indicated above, sufficient thickness may be achieved already by using the first three layers 310, 320, 330, wherein the third layer 330 comprises hardened resin. The preferable thicknesses and materials of these layers 310, 320, 330 have been discussed above.

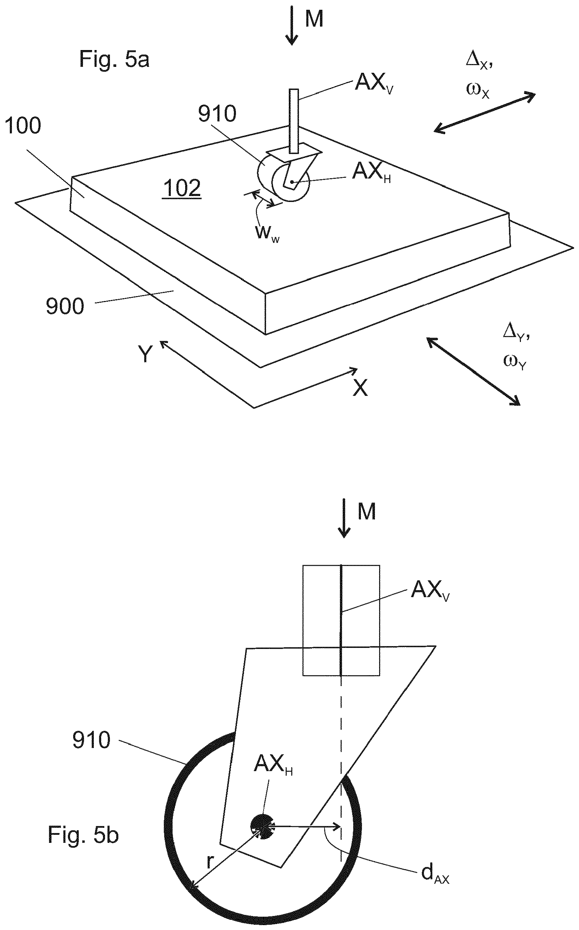

With reference to Figs. 5a and 5b, a wear resistance of these coated panels 100 can be tested in a wear test substantially similar to that described in the standard SFS 3939 (1988-03-21). The test is carried out at a temperature 23±2 °C and in a relative humidity of 50±5 %RH. Referring to Figs 5a and 5b, as indicated in the standard, a test wheel 910, which is rotatable about a horizontal axis AXH, which axis AXH is rotatable about a vertical axis AXV, is loaded with a load M and set on the horizontal surface 102 to be tested. The test wheel 910 is freely movable in a vertical direction, whereby the load M is carried by the surface 102 to be tested. The surface 102 is then moved in two perpendicular horizontal directions X, Y. In the first direction X, the surface 102 is moved relative to the wheel 910 back and forth a distance ΔX with frequency of ωX. In the second direction Y, the surface 102 is moved relative to the wheel 910 back and forth a distance ΔY with frequency of ωY. The sample 100, i.e. a coated plywood panel 100 or a part thereof, may be arranged on a test bench 900, which is movable in first direction X relative to ground, and the test bench may be configured to move the sample in the second direction Y relative to ground, whereby the horizontal position (X, Y) of the vertical axis AXV may be fixed also relative to ground. Also other types of movements are possible. The standard SFS 3939 discloses several possibilities e.g. for the wheel 910, the load M, and the movement parameters ωX, ΔX, ωY, and ΔY.

To test the coated panels 100, a test wheel 910 with a radius r of 55 mm was used. A width w_{w} of the test wheel 910 was 50 mm. A radius of curvature of the surface of the wheel in a direction of the horizontal axis AX_{H} was 0.5 m. The test wheel 910 was made of steel (25 11-03 according to the standard SIS 14 25 11). The test wheel 910 was not hollow. A horizontal distance d_{AX} between a central line of the vertical axis AXv and a central line of the horizontal axis AX_{H} was 40 mm.

The test wheel 910 was moved in the first direction X back and forth a distance ΔX of 390 mm. The frequency of movement ωX in the first direction X was 7.5 primary cycles per minute, wherein one primary cycle consists of one movement back and forth in the first direction X. The test wheel 910 was moved in the second direction Y back and forth a distance ΔY of 260 mm. The frequency of movement ωY in the second direction Y was two secondary cycles per minute, wherein one secondary cycle consists of one movement back and forth in the second direction Y.

A load M of 300 kg (i.e. about 2900 N) was used. A size of the tested coated panel 100 was 600 mm by 600 mm. The coated plywood panel 100 (i.e. the sample) was oriented such that a grain orientation of the topmost veneer layer 110 was parallel to the first direction X.

The test was run in periods of 500 primary cycles. After each period, the condition of the first surface 102 and the first covering 300 forming the first surface 102 was observed. If the first covering 300 and/or the first surface 102 were found to be in sufficient condition, the test was continued another period of 500 primary cycles. Otherwise the sample was considered to have failed, and the number of primary cycles was reported.

In the test, a coated plywood panel 100, of which first covering 300 consists of
- the first layer 310 comprising hardened resin, wherein a surface specific mass of the first layer 310 is 220 g/m²,
- the second layer 320 as discussed above, comprising polyamide-6 and having a thickness of 100 µm; and
- the third layer 330 comprising hardened resin, wherein a surface specific mass of the third layer 330 is 220 g/m²,
could withstand on the average 8000 primary cycles (one significant number) indicating a good wear resistance.

In the test, a coated plywood panel 100, of which first covering 300 consists of
- ten layers (310, 330, 350, ...) comprising hardened resin, wherein a surface specific mass of each of these layers 310 is 220 g/m², and
- nine layers (320, 240, ...) as discussed above, comprising polyamide-6 and having a thickness of 100 µm, and sandwiched in between teach two neighbouring layers of hardened resin (310, 330, ...),
could withstand on the average 200000 primary cycles (one significant number) indicating a good wear resistance.

### Comparative examples

Table 2 indicates adhesion test results of coated plywood panels. The results indicate the adhesion strength of a layer (310, 320, 330) of the first covering 300 to another layer (310, 320) of the first covering 300 (samples 7 to 18) and/or directly to the first veneer layer 110 (samples 1 to 6). Only the samples number 7 and 13 are according to the invention, while other samples are comparative examples. In this regards, in samples 1 to 6 the covering only comprises one layer, whereby they are not part of the invention. As for samples 8 to 12 and 14 to 18, therein the second layer 320 is made from polymer material with low water absorption, whereby they are also not part of the invention.

Table 2 indicates the materials of the first, second and third layer (310, 320, 330) of a covering of a plywood panel. The following acronyms are used:
- PA6: polyamide 6,
- PA11: polyamide 11,
- PA12: polyamide 12,
- PA12 (ct): corona treated polyamide 12,
- PE: polyethylene,
- PP: polypropylene,
- PF: a film comprising 40 wt% paper and 60 wt% phenol-formaldehyde resin, the film having a surface specific mass of 120 g/m²
- none: such a layer is not present.

An adhesion strength is indicated by a number from 0 to 5. The expression "na" indicates that a corresponding result is not applicable for that sample because of absence of a corresponding layer. 0 indicates no adhesion and 5 indicates very strong adhesion. 1 indicates better adhesion than 0; 2 indicates better adhesion than 1; 3 indicates better adhesion than 2; 4 indicates better adhesion than 3; and 5 indicates better adhesion than 4.

As for the adhesion test indicated in Table 2, 12 mm thick birch plywood panels were coated with a covering structure having at least the first layer 310 (samples 1 to 18). In samples 7 to 18, the first layer 310 was covered by a second layer 320. In samples 13 to 18, the second layer 320 was covered by a third layer 330. Reference is also made to Figs. 2a and 3b. The covering was attached to the plywood panel 101 in a lab scale hot-pressing process. In order to attach the covering, panels were pressed for 6 minutes at 140 °C. Pressures used were 2,0 MPa (4 min) followed by 1,2 MPa (1,5 min) followed by 0,5 MPa (0,5 min).

Adhesion between plywood panel and coating and between coating layers were treated according to standard EN 314-1 and the adhesion strength was evaluated on the 0 to 5 as indicated above. After a boiling pre-treatment the bonding quality was tested as disclosed in the standard EN 314-1. The pretreatment included immersion for 4 h in boiling water; followed by drying in the ventilated drying oven for 20 h at (60 ± 3) °C; followed by immersion in boiling water for 4 h; followed by cooling in water at (20 ± 3) °C for at least 1 h. After the pretreatment, the adhesion (i.e. bonding quality) was tested according to the aforementioned standard.

**Table 2: Comparative measurements on adhesion strengths between different layers of a covering of a coated plywood panel.**

| **Sample** | **Materials** | | | **Adhesion** | | |
|---|---|---|---|---|---|---|
| | 1st layer | 2nd layer | 3rd layer | Covering to | 2nd layer to | 3rd layer to |
| | 310 | 310 | 310 | plywood | 1st layer | 2nd layer |
| 1 | PA6 | none | none | 0 | na | na |
| 2 | PA11 | none | none | 0 | na | na |
| 3 | PA12 | none | none | 0 | na | na |
| 4 | PA12 (ct) | none | none | 0 | na | na |
| 5 | PE | none | none | 1 | na | na |
| 6 | PP | none | none | 1 | na | na |
| 7 | PF | PA6 | none | 5 | 5 | na |
| 8 | PF | PA11 | none | 5 | 1 | na |
| 9 | PF | PA12 | none | 5 | 0 | na |
| 10 | PF | PA12 (ct) | none | 5 | 2 | na |
| 11 | PF | PE | none | 5 | 0 | na |
| 12 | PF | PP | none | 5 | 0 | na |
| 13 | PF | PA6 | PF | 5 | 5 | 5 |
| 14 | PF | PA11 | PF | 5 | 1 | 1 |
| 15 | PF | PA12 | PF | 5 | 0 | 0 |
| 16 | PF | PA12 (ct) | PF | 5 | 2 | 2 |
| 17 | PF | PE | PF | 5 | 0 | 0 |
| 18 | PF | PP | PF | 5 | 0 | 0 |

As indicated in column "Covering to plywood", a phenol-formaldehyde (PF) layer is attached to plywood much better than the other polymers. The other polymers have an adhesion of 0 or 1, while the PF layer always has an adhesion of 5.

As indicated in column "2nd layer to 1st layer", PA6 layer (i.e. a second layer 320 according to an embodiment) is attached the PF layer (which is the first layer 310 of an embodiment, provided that material of the second layer 320 is selected according to an embodiment) very well, the adhesion being at the level 5. In contrast the adhesion between other studied polymers and PF is at most on the level of 2.

As indicated in column "3rd layer to 2nd layer", a topmost PF layer (which is the third layer 330 of an embodiment, provided that material of the second layer 320 is selected according to an embodiment) is attached the underlying layer well, provided that the underlying layer consists of PA6. In such a case, also this adhesion strength is at the level 5. In contrast the adhesion between the PF coating and other underlying layers is at most on the level of 2.

These results indicate that a polymer that has a high water absorption, as discussed in the description, bonds well to a resin. Even if in Table 2 only phenol-formaldehyde resin was used as the resin, it seems that this applies also to other resins, since the physical principles responsible for the bonding are the same irrespective of the type of the resin. In particular, the results seem to imply good adhesion in between such a plastic polymer that has good water absorption and a resin of which polymerizable substance comprises at least one of phenol and a material originating from lignin (see above).

## Claims

1. A coated plywood panel (100), having a length (Iₚ), a width (wₚ), and a thickness (tₚ), wherein the thickness (tₚ) is less than the smaller of the length (Iₚ) and the width (wₚ), the coated plywood panel (100) comprising
- a first veneer layer (110), a second veneer layer (120), and a third veneer layer (130), wherein
- the third veneer layer (130) is arranged in between the first veneer layer (110) and the second veneer layer (120) in the direction of the thickness (tₚ) of the plywood panel (100),
- the veneer layers (110, 120, 130) have been attached to each other with adhesive (200), the coated plywood panel (100) further comprising a first covering (300) comprising
- a first layer (310) comprising hardened resin, a third layer (330), and a second layer (320) that is arranged in between the third layer (330) and first layer (310), wherein
- the first layer (310) bonds the second layer (320) to the first veneer layer (110), whereby
- the first covering (300) forms a first surface (102) of the coated plywood panel (100),
**characterized in that**
- the second is layer made of such a plastic polymer material that has a water absorption of at least 5 wt% as measurable according to ASTM D570 as an equilibrium value using water having a temperature of 23 °C and a melting point of at least 200 °C, and
- the third layer (330) comprises hardened phenol formaldehyde resin.

2. The coated plywood panel (100) of the claim 1, wherein
- an adhesion strength between the first covering (300) and the first veneer layer (110) is greater than 10 N/mm as measurable according to the standard ISO 4578.

3. The plywood panel of the claim 1 or 2, wherein
- a surface specific mass of the third layer (330) is from 60 g/m² to 400 g/m²

4. The plywood panel of any of the claims 1 to 3, comprising from 9 to 25 veneer layers (110, 120, 130, 140, 150) wherein
[A]
- each one of such veneer layers (130, 140, 150) that are arranged in between the first veneer layer (110) and the second veneer layer (120) has a thickness of from 1.0 mm to 2.0 mm,
- each one the veneer layers (110, 120, 130, 140, 150) comprises hardwood, preferably birch,
- a surface specific mass of the first layer (310) is from 60 g/m² to 650 g/m² and the first layer (310) comprises paper and at least 50 % resin, preferably phenol formaldehyde resin,
- the second layer (320), preferably having a thickness from 25 µm to 200 µm, comprises polyamide,
- a surface specific mass of the third layer (330) is from 60 g/m² to 400 g/m² and the third layer (330) comprises paper and at least 50 % resin, preferably phenol formaldehyde resin, and
[B,i]
- the third layer (330) forms the first surface (102) of the coated plywood panel (100), wherein a surface normal (N₁₀₂) of the first surface (102) is unidirectional with a thickness (tₚ) of the coated plywood panel (100); or
[B,ii]
- the first covering (300) comprises
• a fourth layer (340), preferably having a thickness from 25 µm to 200 µm, comprising polyamide, and
• a fifth layer (350), wherein the fourth layer (340) is arranged in between the third layer (330) and the fifth layer (350), wherein
- a surface specific mass of the fifth layer (350) is from 60 g/m² to 400 g/m² and the fifth layer (350) comprises paper and at least 50 % resin, preferably phenol formaldehyde resin.

5. The plywood panel of any of the claims 1 to 4, wherein
- a surface specific mass of the first layer (310) is from 60 g/m² to 650 g/m².

6. The plywood panel of any of the claims 1 to 5, wherein
- the coated plywood panel (100) comprises only the first layer (310) in between the second layer (320) and the first veneer layer (110);
preferably,
- the first layer (310) is free from such fibrous material that does not originate from wood.

7. The plywood panel of any of the claims 1 to 6, comprising
- a second covering (400) attached to the second veneer layer (120), wherein
- the second covering (400) is free from wood, and
- the second covering (400) forms a second surface (104) of the coated plywood panel (100), wherein the second surface (104) is opposite to the first surface (102);
preferably,
- the second covering (400) comprises at least one of polypropylene, polyethylene, maleic anhydride polypropylene, maleic anhydride polyethylene, and phenolic resin.

8. A method for manufacturing a coated plywood panel (100), the method comprising
- providing a plywood panel (101) comprising
• a first veneer layer (110), a second veneer layer (120), and a third veneer layer (130), wherein
• the third veneer layer (130) is arranged in between the first veneer layer (110) and the second veneer layer (120) in the direction of the thickness (tₚ) of the plywood panel (100), and
• the veneer layers (110, 120, 130) have been attached to each other with adhesive (200), and
- providing a preform (300') for a first covering (300), the preform (300') comprising a second layer (320) made of such a plastic polymer material that has a water absorption of at least 5 wt% as measurable according to ASTM D570 as an equilibrium value using water having a temperature of 23 °C and a melting point of at least 200 °C, and
- providing resin (310') in between the uncoated plywood panel (101) and the preform (300') for the first covering (300), wherein
- the preform (300') comprises a third layer (330) or the method comprises providing a third layer (330) such that the second layer (320) is arranged in between the third layer (330) and the resin (310'), the method comprising
- bonding the uncoated plywood panel (101) to the preform (300') of the first covering (300) by hot pressing, thereby hardening the resin (310') and forming a first layer (310) of the first covering (300) of which third layer 330 comprises hardened phenol formaldehyde resin.

9. The method of claim 8, comprising
- providing the preform (300') for the first covering (300) in the form of a film or a laminate.

10. The method of claim 8 or 9, comprising
- providing the resin (310') in the form of a film and/or an aqueous solution, optionally as part of an aqueous adhesive;
preferably,
- providing at least some of the resin (310') in the form of a film that has a surface specific mass from 60 g/m² to 400 g/m²
more preferably,
- providing at least some of the resin (310') in the form of a film that comprises paper and at least 50 wt% resin and has a surface specific mass from 60 g/m² to 400 g/m².

11. The method of any of the claims 8 to 10, comprising
- providing such a plywood panel (101) that
• comprises from 9 to 25 veneer layers (110, 120, 130, 140, 150) wherein
• each one of such veneer layers (130, 140, 150) that are arranged in between the first veneer layer (110) and the second veneer layer (120) has a thickness of from 1.0 mm to 2.0 mm,
• each one the veneer layers (110, 120, 130, 140, 150) comprises hardwood, preferably birch, the method comprising
- providing resin (310') in between the uncoated plywood panel (101) and the preform (300') for the first covering (300) by
• applying first resin on the first veneer layer (110) to form a primary first layer (310'a), and
• providing a secondary first layer (310'b) such that the first resin is arranged in between the secondary first layer (310'b) and the first veneer layer (110), the secondary first layer (310'b) comprising paper and at least 50 wt% of second resin, preferably phenol formaldehyde resin, the second resin having a higher molecular weight than the first resin, the secondary first layer (310'b) having a surface specific mass of from 60 g/m² to 400 g/m², wherein
- the third layer (330) comprises paper and at least 50 wt% of resin, preferably phenol formaldehyde resin, and has a surface specific mass of from 60 g/m² to 400 g/m², the method comprising
[B,i]
- providing such a preform (300') or providing the third layer (330) in such a way that the third layer (330) forms the first surface (102) of the coated plywood panel (100), wherein a surface normal (N₁₀₂) of the first surface (102) is unidirectional with a thickness (tₚ) of the coated plywood panel (100); or
[B,ii]
- providing such a preform (300') that comprises
• a fourth layer (340), preferably having a thickness from 25 µm to 200 µm, comprising polyamide, and
• a fifth layer (350), wherein the fourth layer (340) is arranged in between the third layer (330) and the fifth layer (350), wherein
- a surface specific mass of the fifth layer (350) is from 60 g/m² to 400 g/m² and the fifth layer (350) comprises paper and at least 50 % resin, preferably phenol formaldehyde resin.

12. The plywood panel of any of the claims 1 to 7 or the method of any of the claims 8 to 11, wherein
- the second layer (320) comprises polyamide;
preferably,
- the second layer (320) comprises such polyamide that has a carbon to nitrogen number ratio of at most 8, e.g. from 6 to 8;
more preferably,
- the second layer (320) comprises at least one of PA 6, PA 66, and PA 69.

13. The plywood panel of any of the claims 1 to 7 or 12 or the method of any of the claims 8 to 12, wherein
- the second layer (320) comprises thermoplastic polymer;
preferably,
- the second layer (320) consists of thermoplastic polymer.

14. The plywood panel of any of the claims 1 to 7 or 12 or 13, or the method of any of the claims 8 to 13, wherein
- a thickness (t₃₂₀) of the second layer (320) is at least 20 µm, such as from 20 µm to 500 µm, preferably from 25 µm to 200 µm.

15. The plywood panel of any of the claims 1 to 7 or 12 to 14, or the method of any of the claims 8 to 14, wherein
- the first veneer layer (110) comprises hardwood, such as birch;
preferably,
- each veneer layer (110, 120, 130, 140, 150) that comprises wood, comprises hardwood, such as birch.

## Patentansprüche

1. Beschichtete Sperrholzplatte (100) mit einer Länge (lₚ), einer Breite (wₚ) und einer Dicke (tₚ), wobei die Dicke (tₚ) kleiner ist als die kleinere der Länge (lₚ) und der Breite (wₚ), wobei die beschichtete Sperrholzplatte (100) Folgendes umfasst
- eine erste Furnierschicht (110), eine zweite Furnierschicht (120) und eine dritte Furnierschicht (130), wobei
- die dritte Furnierschicht (130) in Richtung der Dicke (tₚ) der Sperrholzplatte (100) zwischen der ersten Furnierschicht (110) und der zweiten Furnierschicht (120) angeordnet ist,
- die Furnierschichten (110, 120, 130) mit Klebstoff (200) aneinander befestigt wurden, wobei die beschichtete Sperrholzplatte (100) ferner eine erste Abdeckung (300) umfasst, die Folgendes umfasst
- eine erste Schicht (310), die gehärtetes Harz umfasst, eine dritte Schicht (330) und eine zweite Schicht (320), die zwischen der dritten Schicht (330) und der ersten Schicht (310) angeordnet ist, wobei
- die erste Schicht (310) die zweite Schicht (320) mit der ersten Furnierschicht (110) verbindet, wodurch
- die erste Abdeckung (300) eine erste Oberfläche (102) der beschichteten Sperrholzplatte (100) bildet,
**dadurch gekennzeichnet, dass**
- die zweite Schicht aus einem solchen Kunststoffpolymermaterial hergestellt ist, das eine Wasserabsorption von mindestens 5 Gew.-% hat, messbar gemäß ASTM D570 als Gleichgewichtswert unter Verwendung von Wasser mit einer Temperatur von 23 °C und einem Schmelzpunkt von mindestens 200 °C, und
- die dritte Schicht (330) gehärtetes Phenol-Formaldehyd-Harz umfasst.

2. Beschichtete Sperrholzplatte (100) nach Anspruch 1, wobei
- eine Haftfestigkeit zwischen der ersten Abdeckung (300) und der ersten Furnierschicht (110) größer als 10 N/mm ist, wie nach der Norm ISO 4578 messbar.

3. Sperrholzplatte nach Anspruch 1 oder 2, wobei
- eine spezifische Oberflächenmasse der dritten Schicht (330) zwischen 60 g/m² und 400 g/m² liegt.

4. Sperrholzplatte nach einem der Ansprüche 1 bis 3, umfassend 9 bis 25 Furnierschichten (110, 120, 130, 140, 150), wobei
[A]
- jede dieser Furnierschichten (130, 140, 150), die zwischen der ersten Furnierschicht (110) und der zweiten Furnierschicht (120) angeordnet sind, eine Dicke von 1,0 mm bis 2,0 mm aufweist,
- jede der Furnierschichten (110, 120, 130, 140, 150) aus Hartholz, vorzugsweise Birke, besteht,
- eine oberflächenspezifische Masse der ersten Schicht (310) 60 g/m² bis 650 g/m² beträgt und die erste Schicht (310) Papier und mindestens 50 % Harz, vorzugsweise Phenol-Formaldehyd-Harz, umfasst,
- die zweite Schicht (320), vorzugsweise mit einer Dicke von 25 µm bis 200 µm, Polyamid umfasst
- eine oberflächenspezifische Masse der dritten Schicht (330) 60 g/m² bis 400 g/m² beträgt und die dritte Schicht (330) Papier und mindestens 50 % Harz, vorzugsweise Phenol-Formaldehyd-Harz, umfasst, und
[B, i]
- die dritte Schicht (330) die erste Oberfläche (102) der beschichteten Sperrholzplatte (100) bildet,
wobei eine Oberflächennormale (N₁₀₂) der ersten Oberfläche (102) unidirektional mit einer Dicke (tₚ) der beschichteten Sperrholzplatte (100) ist; oder
[B,ii]
- die erste Abdeckung (300) Folgendes umfasst
o eine vierte Schicht (340), vorzugsweise mit einer Dicke von 25 µm bis 200 µm, umfassend Polyamid, und
o eine fünfte Schicht (350), wobei die vierte Schicht (340) zwischen der dritten Schicht (330) und der fünften Schicht (350) angeordnet ist, wobei
- eine oberflächenspezifische Masse der fünften Schicht (350) 60 g/m² bis 400 g/m² beträgt und die fünfte Schicht (350) Papier und mindestens 50 % Harz, vorzugsweise Phenol-Formaldehyd-Harz, umfasst.

5. Sperrholzplatte nach einem der Ansprüche 1 bis 4, wobei
- eine spezifische Oberflächenmasse der ersten Schicht (310) zwischen 60 g/m² und 650 g/m² liegt.

6. Sperrholzplatte nach einem der Ansprüche 1 bis 5, wobei
- die beschichtete Sperrholzplatte (100) nur die erste Schicht (310) zwischen der zweiten Schicht (320) und der ersten Furnierschicht (110) umfasst;
vorzugsweise,
- die erste Schicht (310) frei von solchem Fasermaterial ist, das nicht aus Holz stammt.

7. Sperrholzplatte nach einem der Ansprüche 1 bis 6, umfassend
- eine zweite Abdeckung (400), die an der zweiten Furnierschicht (120) angebracht ist, wobei
- die zweite Abdeckung (400) holzfrei ist, und
- die zweite Abdeckung (400) eine zweite Oberfläche (104) der beschichteten Sperrholzplatte (100) bildet, wobei die zweite Oberfläche (104) der ersten Oberfläche (102) gegenüberliegt;
vorzugsweise,
- die zweite Abdeckung (400) mindestens eines von Polypropylen, Polyethylen, Maleinsäureanhydrid-Polypropylen, Maleinsäureanhydrid-Polyethylen und Phenolharz umfasst.

8. Verfahren zum Herstellen einer beschichteten Sperrholzplatte (100), wobei das Verfahren Folgendes umfasst
- Bereitstellen einer Sperrholzplatte (101), umfassend
o eine erste Furnierschicht (110), eine zweite Furnierschicht (120) und eine dritte Furnierschicht (130), wobei
o die dritte Furnierschicht (130) in Richtung der Dicke (tₚ) der Sperrholzplatte (100) zwischen der ersten Furnierschicht (110) und der zweiten Furnierschicht (120) angeordnet ist, und
o die Furnierschichten (110, 120, 130) mit Kleber (200) aneinander befestigt wurden, und
- Bereitstellen eines Vorformlings (300') für eine erste Abdeckung (300), wobei der Vorformling (300') eine zweite Schicht (320) aus einem solchen Kunststoffpolymermaterial umfasst, das eine Wasseraufnahme von mindestens 5 Gew.-% aufweist, messbar gemäß ASTM D570 als Gleichgewichtswert unter Verwendung von Wasser mit einer Temperatur von 23 °C und einem Schmelzpunkt von mindestens 200 °C und
- Bereitstellen von Harz (310') zwischen der unbeschichteten Sperrholzplatte (101) und dem Vorformling (300') für die erste Abdeckung (300), wobei
- der Vorformling (300') eine dritte Schicht (330) umfasst oder das Verfahren das Bereitstellen einer dritten Schicht (330) umfasst, so dass die zweite Schicht (320) zwischen der dritten Schicht (330) und dem Harz (310') angeordnet ist, wobei das Verfahren Folgendes umfasst
- Verbinden der unbeschichteten Sperrholzplatte (101) mit dem Vorformling (300') der ersten Abdeckung (300) durch Heißpressen, wodurch das Harz (310') gehärtet wird und eine erste Schicht (310) der ersten Abdeckung (300) gebildet wird, deren dritte Schicht 330 gehärtetes Phenol-Formaldehyd-Harz umfasst.

9. Verfahren nach Anspruch 8, umfassend
- Bereitstellen des Vorformlings (300') für die erste Abdeckung (300) in Form einer Folie oder eines Laminats.

10. Verfahren nach Anspruch 8 oder 9, umfassend
- Bereitstellen des Harzes (310') in Form einer Folie und/oder einer wässrigen Lösung, optional als Teil eines wässrigen Klebstoffs;
vorzugsweise,
- Bereitstellen zumindest eines Teils des Harzes (310') in Form einer Folie, die eine oberflächenspezifische Masse von 60 g/m² bis 400 g/m² hat
mehr bevorzugt,
- Bereitstellen von zumindest einem Teil des Harzes (310') in Form einer Folie, die Papier und zumindest 50 Gew.-% Harz umfasst und eine oberflächenspezifische Masse von 60 g/m² bis 400 g/m² hat.

11. Verfahren nach einem der Ansprüche 8 bis 10, umfassend
- Bereitstellen einer solchen Sperrholzplatte (101), die
o 9 bis 25 Furnierschichten (110, 120, 130, 140, 150) umfasst, wobei
o jede dieser zwischen der ersten Furnierschicht (110) und der zweiten Furnierschicht (120) angeordneten Furnierschichten (130, 140, 150) eine Dicke von 1,0 mm bis 2,0 mm aufweist,
o jede der Furnierschichten (110, 120, 130, 140, 150) Hartholz, vorzugsweise Birke, umfasst, wobei das Verfahren Folgendes umfasst
- Bereitstellen von Harz (310') zwischen der unbeschichteten Sperrholzplatte (101) und dem Vorformling (300') für die erste Abdeckung (300) durch
o Aufbringen eines ersten Harzes auf die erste Furnierschicht (110), um eine primäre erste Schicht (310'a) zu bilden, und
o Bereitstellen einer sekundären ersten Schicht (310'b), so dass das erste Harz zwischen der sekundären ersten Schicht (310'b) und der ersten Furnierschicht (110) angeordnet ist, wobei die sekundäre erste Schicht (310'b) Papier und mindestens 50 Gew.-% zweites Harz, vorzugsweise Phenol-Formaldehyd-Harz, umfasst, das zweite Harz ein höheres Molekulargewicht als das erste Harz hat, die sekundäre erste Schicht (310'b) eine spezifische Oberflächenmasse von 60 g/m² bis 400 g/m² hat, wobei
- die dritte Schicht (330) Papier und mindestens 50 Gew.-% Harz, vorzugsweise Phenol-Formaldehyd-Harz, umfasst und eine oberflächenspezifische Masse von 60 g/m² bis 400 g/m² aufweist, wobei das Verfahren Folgendes umfasst
[B, i]
- Bereitstellen eines solchen Vorformlings (300') oder Bereitstellen der dritten Schicht (330) derart, dass die dritte Schicht (330) die erste Oberfläche (102) der beschichteten Sperrholzplatte (100) bildet, wobei eine Oberflächennormale (N₁₀₂) der ersten Oberfläche (102) unidirektional mit einer Dicke (tₚ) der beschichteten Sperrholzplatte (100) ist; oder
[B,ii]
- Bereitstellen eines solchen Vorformlings (300'), der Folgendes umfasst
o eine vierte Schicht (340), vorzugsweise mit einer Dicke von 25 µm bis 200 µm, umfassend Polyamid, und
o eine fünfte Schicht (350), wobei die vierte Schicht (340) zwischen der dritten Schicht (330) und der fünften Schicht (350) angeordnet ist, wobei
- eine oberflächenspezifische Masse der fünften Schicht (350) 60 g/m² bis 400 g/m² beträgt und die fünfte Schicht (350) Papier und mindestens 50 % Harz, vorzugsweise Phenol-Formaldehyd-Harz, umfasst.

12. Sperrholzplatte nach einem der Ansprüche 1 bis 7 oder Verfahren nach einem der Ansprüche 8 bis 11, wobei
- die zweite Schicht (320) Polyamid umfasst; vorzugsweise,
- die zweite Schicht (320) ein solches Polyamid umfasst, das ein Kohlenstoff-zu-Stickstoff-Zahlenverhältnis von höchstens 8 aufweist, z.B. von 6 bis 8;
mehr bevorzugt,
- die zweite Schicht (320) mindestens eines von PA 6, PA 66 und PA 69 umfasst.

13. Sperrholzplatte nach einem der Ansprüche 1 bis 7 oder 12 oder Verfahren nach einem der Ansprüche 8 bis 12, wobei
- die zweite Schicht (320) thermoplastisches Polymer umfasst;
vorzugsweise,
- die zweite Schicht (320) aus thermoplastischem Polymer besteht.

14. Sperrholzplatte nach einem der Ansprüche 1 bis 7 oder 12 oder 13, oder Verfahren nach einem der Ansprüche 8 bis 13, wobei
- eine Dicke (t₃₂₀) der zweiten Schicht (320) mindestens 20 µm beträgt, beispielsweise 20 µm bis 500 µm, vorzugsweise 25 µm bis 200 µm.

15. Sperrholzplatte nach einem der Ansprüche 1 bis 7 oder 12 bis 14, oder Verfahren nach einem der Ansprüche 8 bis 14, wobei
- die erste Furnierschicht (110) Hartholz, wie beispielsweise Birke, umfasst;
vorzugsweise,
- jede aus Holz bestehende Furnierschicht (110, 120, 130, 140, 150) aus Hartholz, wie beispielsweise Birke, besteht.

## Revendications

1. Panneau de contreplaqué revêtu (100), ayant une longueur (lₚ), une largeur (wₚ) et une épaisseur (t_{P}), dans lequel l'épaisseur (t_{P}) est inférieure à la plus faible valeur parmi la longueur (lₚ) et la largeur (wₚ), le panneau de contreplaqué revêtu (100) comprenant
- une première couche de placage (110), une deuxième couche de placage (120) et une troisième couche de placage (130), dans lequel
- la troisième couche de placage (130) est agencée entre la première couche de placage (110) et la deuxième couche de placage (120) dans la direction de l'épaisseur (tₚ) du panneau de contreplaqué (100),
- les couches de placage (110, 120, 130) ont été fixées les unes aux autres à l'aide d'un adhésif (200), le panneau de contreplaqué revêtu (100) comprenant en outre un premier revêtement (300) comprenant
- une première couche (310) comprenant de la résine durcie, une troisième couche (330) et une deuxième couche (320) qui est agencée entre la troisième couche (330) et la première couche (310), dans lequel
- la première couche (310) lie la deuxième couche (320) à la première couche de placage (110), de sorte que
- le premier revêtement (300) forme une première surface (102) du panneau de contreplaqué revêtu (100), **caractérisé en ce que**
- la deuxième couche est constituée d'un matériau polymère plastique tel qu'il présente une absorption d'eau d'au moins 5 % en poids, mesurable selon la norme ASTM D570 en tant que valeur d'équilibre en utilisant de l'eau ayant une température de 23°C, et un point de fusion d'au moins 200°C, et
- la troisième couche (330) comprend de la résine phénol formaldéhyde durcie.

2. Panneau de contreplaqué revêtu (100) selon la revendication 1, dans lequel
- une force d'adhérence entre le premier revêtement (300) et la première couche de placage (110) est supérieure à 10 N/mm mesurable selon la norme ISO 4578.

3. Panneau de contreplaqué selon la revendication 1 ou 2, dans lequel
- une masse surfacique spécifique de la troisième couche (330) est comprise entre 60 g/m² et 400 g/m².

4. Panneau de contreplaqué selon l'une quelconque des revendications 1 à 3, comprenant de 9 à 25 couches de placage (110, 120, 130, 140, 150) dans lequel
[A]
- chacune de ces couches de placage (130, 140, 150) qui sont agencées entre la première couche de placage (110) et la deuxième couche de placage (120) a une épaisseur comprise entre 1,0 mm et 2,0 mm,
- chacune des couches de placage (110, 120, 130, 140, 150) comprend du bois dur, de préférence du bouleau,
- une masse surfacique spécifique de la première couche (310) est comprise entre 60 g/m² et 650 g/m² et la première couche (310) comprend du papier et au moins 50 % de résine, de préférence de la résine phénol formaldéhyde,
- la deuxième couche (320), ayant de préférence une épaisseur comprise entre 25 µm et 200 µm, comprend du polyamide,
- une masse surfacique spécifique de la troisième couche (330) est comprise entre 60 g/m² et 400 g/m² et la troisième couche (330) comprend du papier et au moins 50 % de résine, de préférence de la résine phénol formaldéhyde, et
[B, i]
- la troisième couche (330) forme la première surface (102) du panneau de contreplaqué revêtu (100), dans lequel une normale à la surface (N₁₀₂) de la première surface (102) est unidirectionnelle avec une épaisseur (tₚ) du panneau de contreplaqué revêtu (100) ; ou
[B, ii]
- le premier revêtement (300) comprend
• une quatrième couche (340), ayant de préférence une épaisseur comprise entre 25 µm et 200 µm, comprenant du polyamide, et
• une cinquième couche (350), dans lequel la quatrième couche (340) est agencée entre la troisième couche (330) et la cinquième couche (350), dans lequel
- une masse surfacique spécifique de la cinquième couche (350) est comprise entre 60 g/m² et 400 g/m² et la cinquième couche (350) comprend du papier et au moins 50 % de résine, de préférence de la résine phénol formaldéhyde.

5. Panneau de contreplaqué selon l'une quelconque des revendications 1 à 4, dans lequel
- une masse surfacique spécifique de la première couche (310) est comprise entre 60 g/m² et 650 g/m².

6. Panneau de contreplaqué selon l'une quelconque des revendications 1 à 5, dans lequel
- le panneau de contreplaqué revêtu (100) comprend uniquement la première couche (310) entre la deuxième couche (320) et la première couche de placage (110) ; de préférence,
- la première couche (310) est exempte d'un tel matériau fibreux qui ne provient pas du bois.

7. Panneau de contreplaqué selon l'une quelconque des revendications 1 à 6, comprenant
- un second revêtement (400) fixé à la deuxième couche de placage (120), dans lequel
- le second revêtement (400) est exempt de bois, et
- le second revêtement (400) forme une seconde surface (104) du panneau de contreplaqué revêtu (100), dans lequel la seconde surface (104) est opposée à la première surface (102) ;
de préférence,
- le second revêtement (400) comprend au moins l'un parmi le polypropylène, le polyéthylène, le polypropylène anhydride maléique, le polyéthylène anhydride maléique et la résine phénolique.

8. Procédé de fabrication d'un panneau de contreplaqué revêtu (100), le procédé comprenant
- la fourniture d'un panneau de contreplaqué (101) comprenant
• une première couche de placage (110), une deuxième couche de placage (120) et une troisième couche de placage (130), dans lequel
• la troisième couche de placage (130) est agencée entre la première couche de placage (110) et la deuxième couche de placage (120) dans la direction de l'épaisseur (t_{P}) du panneau de contreplaqué (100), et
• les couches de placage (110, 120, 130) ont été fixées entre elles au moyen d'un adhésif (200), et
- la fourniture d'une préforme (300') pour un premier revêtement (300), la préforme (300') comprenant une deuxième couche (320) constituée d'un matériau polymère plastique tel qu'il présente une absorption d'eau d'au moins 5 % en poids, mesurable selon la norme ASTM D570 en tant que valeur d'équilibre en utilisant de l'eau ayant une température de 23°C, et un point de fusion d'au moins 200°C, et
- la fourniture d'une résine (310') entre le panneau de contreplaqué non revêtu (101) et la préforme (300') pour le premier revêtement (300), dans lequel
- la préforme (300') comprend une troisième couche (330) ou le procédé comprend la fourniture d'une troisième couche (330) de sorte que la deuxième couche (320) est agencée entre la troisième couche (330) et la résine (310'), le procédé comprenant
- la liaison du panneau de contreplaqué non revêtu (101) avec la préforme (300') du premier revêtement (300) par pressage à chaud, durcissant ainsi la résine (310') et formant une première couche (310) du premier revêtement (300) dont la troisième couche 330 contient de la résine phénol formaldéhyde durcie.

9. Procédé selon la revendication 8, comprenant
- la fourniture de la préforme (300') pour le premier revêtement (300) sous la forme d'un film ou d'un stratifié.

10. Procédé selon la revendication 8 ou 9, comprenant
- la fourniture de la résine (310') sous la forme d'un film et/ou d'une solution aqueuse, éventuellement en tant que partie d'un adhésif aqueux ;
de préférence,
- la fourniture d'au moins une certaine quantité de la résine (310') sous la forme d'un film qui a une masse surfacique spécifique comprise entre 60 g/m² et 400 g/m² de manière encore plus préférable,
- la fourniture d'au moins une certaine quantité de la résine (310') sous la forme d'un film qui comprend du papier et au moins 50 % en poids de résine et présente une masse surfacique spécifique comprise entre 60 g/m² et 400 g/m².

11. Procédé selon l'une quelconque des revendications 8 à 10, comprenant
- la fourniture d'un tel panneau de contreplaqué (101) qui
• comprend de 9 à 25 couches de placage (110, 120, 130, 140, 150) dans lequel
• chacune de ces couches de placage (130, 140, 150) qui sont agencées entre la première couche de placage (110) et la deuxième couche de placage (120) a une épaisseur comprise entre 1,0 mm et 2,0 mm,
• chacune des couches de placage (110, 120, 130, 140, 150) comprend du bois dur, de préférence du bouleau, le procédé comprenant
- la fourniture de la résine (310') entre le panneau de contreplaqué non revêtu (101) et la préforme (300') pour le premier revêtement (300) en
• appliquant une première résine sur la première couche de placage (110) pour former une première couche primaire (310'a), et
• la fourniture d'une première couche secondaire (310'b) de sorte que la première résine est agencée entre la première couche secondaire (310'b) et la première couche de placage (110), la première couche secondaire (310'b) comprenant du papier et au moins 50 % en poids d'une seconde résine, de préférence une résine phénol formaldéhyde, la seconde résine ayant un poids moléculaire supérieur à celui de la première résine, la première couche secondaire (310'b) ayant une masse surfacique spécifique comprise entre 60 g/m² et 400 g/m², dans lequel
- la troisième couche (330) comprend du papier et au moins 50 % en poids de résine, de préférence une résine phénol formaldéhyde, et présente une masse surfacique spécifique comprise entre 60 g/m² et 400 g/m², le procédé comprenant
[B, i]
- la fourniture d'une telle préforme (300') ou la fourniture de la troisième couche (330) de telle manière que la troisième couche (330) forme la première surface (102) du panneau de contreplaqué revêtu (100), dans lequel une normale à la surface (N₁₀₂) de la première surface (102) est unidirectionnelle avec une épaisseur (tₚ) du panneau de contreplaqué revêtu (100) ; ou
[B, ii]
- la fourniture d'une telle préforme (300') qui comprend
• une quatrième couche (340), ayant de préférence une épaisseur comprise entre 25 µm et 200 µm, comprenant du polyamide, et
• une cinquième couche (350), dans lequel la quatrième couche (340) est agencée entre la troisième couche (330) et la cinquième couche (350), dans lequel
- une masse surfacique spécifique de la cinquième couche (350) est comprise entre 60 g/m² et 400 g/m² et la cinquième couche (350) comprend du papier et au moins 50 % de résine, de préférence de la résine phénol formaldéhyde.

12. Panneau de contreplaqué selon l'une quelconque des revendications 1 à 7 ou procédé selon l'une quelconque des revendications 8 à 11, dans lequel
- la deuxième couche (320) comprend du polyamide ;
de préférence,
- la deuxième couche (320) comprend un tel polyamide qui a un rapport numérique de carbone sur azote inférieur ou égal à 8, par exemple entre 6 et 8 ;
de manière encore plus préférable,
- la deuxième couche (320) comprend au moins l'un parmi PA 6, PA 66 et PA 69.

13. Panneau de contreplaqué selon l'une quelconque des revendications 1 à 7 ou 12 ou procédé selon l'une quelconque des revendications 8 à 12, dans lequel
- la deuxième couche (320) comprend un polymère thermoplastique ; de préférence,
- la deuxième couche (320) est constituée de polymère thermoplastique.

14. Panneau de contreplaqué selon l'une quelconque des revendications 1 à 7 ou 12 ou 13, ou procédé selon l'une quelconque des revendications 8 à 13, dans lequel
- une épaisseur (t₃₂₀) de la deuxième couche (320) est d'au moins 20 µm, par exemple entre 20 µm et 500 µm, de préférence entre 25 µm et 200 µm.

15. Panneau de contreplaqué selon l'une quelconque des revendications 1 à 7 ou 12 à 14, ou procédé selon l'une quelconque des revendications 8 à 14, dans lequel
- la première couche de placage (110) comprend du bois dur, tel que du bouleau ; de préférence,
- chaque couche de placage (110, 120, 130, 140, 150) qui comprend du bois, comprend du bois dur, tel que du bouleau.
